# EUROPEAN PATENT APPLICATION

(11) **EP 4 811 144 A1**
(43) Date of publication of application: **23.09.2026**
(21) Application number: 26162840.8
(22) Date of filing: 06.03.2026
(51) Int. Cl.: G06F 12/1009, G06F 12/1081, G06F 12/126, G06F 11/07, G06F 15/173

(54) **REMOTE DIRECT MEMORY ACCESS WITH ENHANCED MEMORY REGISTRATION**

(30) Priority: 21.03.2025 US 202519086780
(71) Applicant: Microsoft Technology Licensing, LLC, Redmond, Washington 98052-6399 (US)
(72) Inventor: SUBRAMANIAN, SRIKANTH, Redmond, 98052-6399 (US); TARANOV, KONSTANTIN, Redmond, 98052-6399 (US); EL HADDAD, MAHMOUD SHAWKY, Redmond, 98052-6399 (US)
(74) Representative: CMS Cameron McKenna Nabarro Olswang LLP

(57) **Abstract**

Systems and methods are disclosed herein for improvements to memory registration. In an example system, a set of page table entries (PTEs) are reserved in a first network interface device of a first computing device. In the example, each page table entry comprises a placeholder for a memory pointer. A page in the physical memory is pinned by a kernel of the first computing device. In one example, the request to pin the page in the physical memory originates from an application seeking to perform an RDMA operation. A page table entry of the set of PTEs in the network interface device is configured with information indicative of a physical memory address corresponding to the pinned page. A remote direct memory access operation is subsequently performed over a network based on the page table entry.

## Description

### BACKGROUND

When transferring data between different computing systems, the data is commonly transferred over a network connection. In a typical example, a kernel in a first computing system frames the data in an appropriate set of packets using various operations, after which the data is transmitted to a second computing system. Upon receiving the data, the kernel in the second computing system performs various additional operations on the received data, such as packet loss handling, reassembly, and segmentation. This process continues for each set of data that is transmitted between the devices.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Systems and methods are disclosed herein for improvements to memory registration. In an example system, a set of page table entries (PTEs) are reserved in a first network interface device of a first computing device. In the example, each page table entry comprises a placeholder for a memory pointer. A page in the physical memory is pinned by a kernel of the first computing device. In one example, the request to pin the page in the physical memory originates from an application seeking to perform an RDMA operation. A page table entry of the set of PTEs in the network interface device is configured with information indicative of a physical memory address corresponding to the pinned page. A remote direct memory access operation is subsequently performed over a network based on the page table entry.

Further features and advantages of the embodiments, as well as the structure and operation of various embodiments, are described in detail below with reference to the accompanying drawings. It is noted that the claimed subject matter is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form a part of the specification, illustrate embodiments of the present application and, together with the description, further serve to explain the principles of the embodiments and to enable a person skilled in the pertinent art to make and use the embodiments.
FIG. 1 shows a block diagram of a memory registration system, according to an example embodiment.
FIG. 2 shows a block diagram of a system for performing a memory registration, in accordance with an example embodiment.
FIG. 3 shows a flowchart of method for registration of a memory, in accordance with an example embodiment.
FIG. 4 shows a flowchart of a method for performing an RDMA operation using a remote token, in accordance with an example embodiment.
FIG. 5 shows a flowchart of a method for obtaining a token referencing the PTEs, in accordance with an example embodiment.
FIG. 6 shows a flowchart of a method for configuring a PTE of a network interface device, in accordance with an example embodiment.
FIG. 7 shows a flowchart of a method for deregistering a configuration of a page table entry, in accordance with an example embodiment.
FIG. 8 shows a block diagram of a memory registration system that implements one or more of the disclosed techniques, according to an example embodiment.
FIG. 9 shows a block diagram of an example computer system in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### II. Example Embodiments

When transferring data between different computing systems, the data is commonly transferred over a network connection. In a typical example, a kernel in a first computing system frames the data in an appropriate set of packets using various operations, after which the data is transmitted to a second computing system. Upon receiving the data, the kernel in the second computing system performs various additional operations on the received data, such as packet loss handling, reassembly, and segmentation. This process continues for each set of data that is transmitted between the devices.

However, such a process requires a heavy utilization of the kernels on both computing systems to complete the data transfer, which can degrade the overall speed at which the data transfer operates. As certain computing systems continuously rely on a large number of data transfers, the latency introduced by these types of data transfers results in diminished performance of those systems.

To address such issues, data transfers are performed using remote direct memory access (RDMA) techniques to improve the input/output (I/O) performance of computing devices. With RDMA techniques, many operations that a kernel typically performs for a data transfer are bypassed, as a network interface card (NIC) directly accesses a physical memory where the data is located (or is to be transferred) through user mode application programming interface (API) invocations. Prior to performing a transfer using RDMA, memory registration typically occurs, which causes the physical pages corresponding to the application's virtual memory to be pinned, or moved, to a dynamic random access memory (DRAM) by the kernel (or operating system (OS)). Such pinning reduces the likelihood that the memory is not paged out when RDMA operations are in progress, allowing the RDMA operation to complete successfully. If the memory is paged out, a page fault occurs, requiring the kernel to intervene and bring one or more pages back into memory to allow the RDMA operation to complete. Such an intervention, however, requires that the NIC wait until the page is back in memory, resulting in an increased latency and negating certain benefits achievable through RDMA transfers.

In some instances, the kernel ensures that the physical memory pinning remains when the process is swapped out. This allows for the physical memory address region in the DRAM corresponding to a pinned virtual address space to remain unavailable to other processes in the system until the pinning is explicitly deregistered.

Memory registration, however, can be an expensive step that utilizes the kernel to pin the address space in physical memory and configure the NIC with such information to directly access the memory. For instance, such a registration (and deregistration) process occurs for each RDMA operation to be performed, which can add significant latency to data transfers in certain applications. In addition, keeping a large memory registered by a single process affects the availability of physical memory on a device (which is limited relative to a virtual address space used by an application), constraining the physical memory availability for other processes.

Embodiments described herein overcome these issues in conventional systems. For instance, according to the embodiments described herein, memory registration is performed in an improved manner. At the beginning of the memory registration process, registration entries are reserved in a network interface device, such as a NIC. Rather than populating the entries with pointers to physical memory at this stage, the reserved entries are populated with placeholders initially. When an application seeks to perform a transfer of data over a network using an RDMA operation, memory is pinned and the registration entries are updated in response. The network interface device then proceeds with the transfer of data by directly accessing the physical memory (rather than transferring the data through the kernel). In addition, once the operation is completed, the registration entries are deregistered and allowed to be used for another RDMA operation, without having to repeat the process of reserving entries.

Such techniques advantageously provide improvements to computing components and networking (e.g., data transfers over a network). For instance, in accordance with disclosed techniques, a network interface device (such as a network interface card (NIC)) is able to directly access physical memory, both locally (e.g., on the same computing device) or remotely (e.g., on another computing device), depending on the type of operation. This direct memory access allows for a speed improvement in I/O operations (e.g., a reduction in latency), which also benefits the processes which depend on those I/O operations (e.g., database programs, analytics programs, etc.).

In addition, such techniques reduce the involvement of the kernel during the memory registration process and reduce the need for repeated memory registrations on the network interface card, thereby further reducing the latency when performing I/O operations. For instance, by incorporating a memory registration process as disclosed herein which involves separate steps or phases, the initial step of (which is commonly the most time-consuming aspect) of the registration where the network interface device is programmed to reserve page table entries (PTEs) for a given process is performed only once for the process. Once those PTEs are reserved, the process is able to utilize those PTEs for various operations (e.g., different operations) without programming the network interface device to reserve additional PTEs. Rather, in accordance with disclosed techniques, the mapping of virtual addresses in the existing set of PTEs are performed separately when RDMA transactions take place, thereby improving the speed at which memory registration is performed. The improved speed is achieved, as NICs often have a slower on-board processor (e.g., a central processing unit (CPU)) and memory (DRAM) than the computer in which the NIC is present, resulting in the NIC's ability to perform programming being slower than the computer's DRAM. Thus, since the NIC consumes the bulk of the time during memory registration, an initial memory registration to reserve the PTEs is performed only once in accordance with disclosed techniques, thereby improving the overall registration speed.

Still further, in accordance with disclosed techniques, an application (e.g., a process) is given the ability to control the addresses that are pinned to physical memory with respect to registering and deregistering memory. This allows for applications to be ensured that pages pinned in the memory will remain pinned until the operation completes and the memory is deregistered, thereby reducing the likelihood of costly page faults. As RDMA operations achieve improved transfer speeds by virtue of reducing the involvement of a kernel, the presence of page faults (which require the intervention of the kernel for rectification, which can be costly depending on the CPU load in the system) can negatively impact RDMA performance. Thus, by reducing the likelihood of page faults, improved transfer speeds can be achieved in accordance with disclosed techniques.

Still further, the disclosed techniques allow for memory to be deregistered relatively quickly (e.g., upon completion of a transaction), where the registration is able to be reused upon deregistration. By deregistering the memory in such a manner, physical memory used for a completed RDMA transfers can be unpinned quickly (rather than keeping the memory pinned for the duration of the process, which unnecessarily utilizes physical memory resources), allowing the memory to be used for additional RDMA operations, or even other processes altogether.

These advantages of the present embodiments are only illustrative, and other advantages are discussed in greater detail throughout this disclosure. Such embodiments are implemented in various ways to perform memory registration.

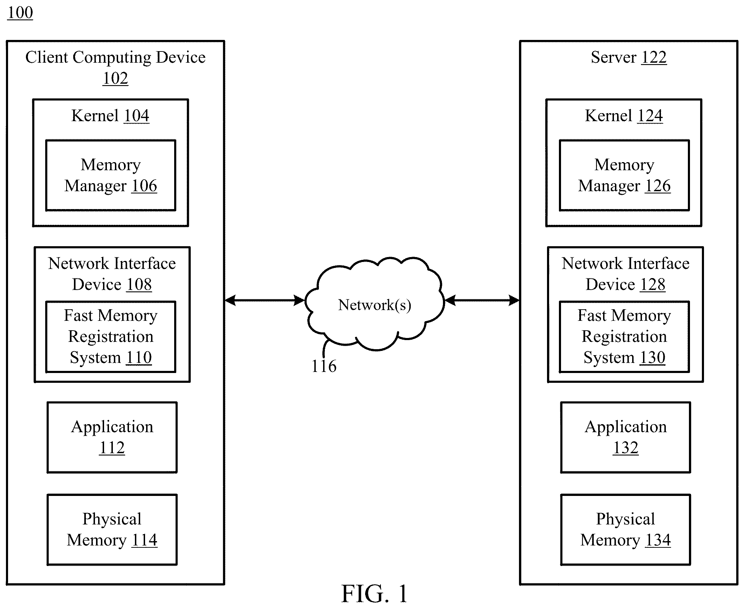

For instance, FIG. 1 shows a block diagram of a memory registration system 100, according to an example embodiment. As shown in FIG. 1, system 100 includes a client computing device 102 and a server 122 coupled via a network 116. Computing device 102 includes a kernel 104, a network interface device 108, an application 112, and a physical memory 114. Kernel 104 includes a memory manager 106. Network interface device 108 includes a fast memory registration system 110. Server 122 includes a kernel 124, a network interface device 128, an application 132, and a physical memory 134. Kernel 124 includes a memory manager 126. Network interface device 128 includes a fast memory registration system 130.

An example device that incorporates the functionality of client computing device 102 and/or server 122 (or any subcomponents therein, whether or not illustrated in FIG. 1) is described below in reference to FIG. 10. It is noted that system 100 comprises any number of devices in example embodiments, including those illustrated in FIG. 1 and optionally one or more further devices or components not expressly illustrated. System 100 is further described as follows.

In an example implementation, network 116 includes one or more of any of a local area network (LAN), a wide area network (WAN), a personal area network (PAN), a combination of communication networks, such as the Internet, and/or a virtual network. In example implementations, client computing device 102 and/or server 122 communicate via network 116. In an implementation, any one or more of client computing device 102 and/or server 122 communicate over network 116 via one or more application programming interfaces (API) and/or according to other interfaces and/or techniques. In an example, client computing device 102 and/or server 122 each include at least one network interface that enables communications with each other. Examples of such a network interface, wired or wireless, include an IEEE 802.11 wireless LAN (WLAN) wireless interface, a Worldwide Interoperability for Microwave Access (Wi-MAX) interface, an Ethernet interface, a Universal Serial Bus (USB) interface, a cellular network interface, a Bluetooth^{™} interface, a near field communication (NFC) interface, etc. Further examples of network interfaces are described elsewhere herein.

In examples, client computing device 102 comprises any one or more computing devices, servers, services, local processes, remote machines, web services, etc. for interacting with one or more other computing devices, such as server 122 (or another client computing device). In various embodiments, client computing device 102 comprises one or more applications, operating systems, virtual machines, storage devices, etc. used to store, retrieve, and/or analyze data (e.g., database data) that is stored locally and/or remotely. In some examples, client computing device 102 interacts with one or more server devices, such as server 122, to access and/or analyze such data. Such interaction includes, but is not limited to, sending data to server 122 and/or receiving data from server 122.

In examples, client computing device 102 comprises any type of stationary or mobile computing device, including a mobile computer or mobile computing device (e.g., a Microsoft^{®} Surface^{®} device, a personal digital assistant (PDA), a laptop computer, a notebook computer, a tablet computer, a netbook, etc.), a desktop computer, a server, a mobile phone or handheld device (e.g., a cell phone, a smart phone, etc.), a wearable computing device (e.g., a head-mounted device including smart glasses, a smart watch, etc.), an Internet-of-Things (IoT) device, or other type of stationary or mobile device. Client computing device 102 is not limited to a physical machine, but include other types of machines or nodes, such as a virtual machine in various examples. In accordance with an embodiment, client computing device 102 is associated with a user (e.g., an individual user, a group of users, an organization, a family user, a customer user, an employee user, an admin user (e.g., a service team user, a developer user, a management user, etc.), etc.). In an example, client computing device 102 interfaces with other components illustrated in FIG. 1 through APIs and/or by other mechanisms.

In examples, computing device 102 is configured to execute application 112. In embodiments, application 112 comprises program code that is executed to process data (e.g., send data, receive data, perform operations on such data, etc.) in various ways. As used herein, processing data includes causing data to be processed (e.g., by another component or entity). In an embodiment, application 112 receives data and/or sends data to one or more other components or entities as described herein, including but not limited to physical memory 114 and/or a component of server 122 (e.g., application 132 and/or physical memory 134).

In various embodiments, application 112 utilizes memory in a virtual (or logical) memory space with corresponding virtual (or logical) memory addresses. For instance, where application 112 needs a portion of the virtual memory space pinned to physical memory, the virtual memory space is pinned to physical memory 114 (e.g., by kernel 104), as described in greater detail below. As used herein, the virtual memory or virtual space for an application refers to an address space accessible to the application during execution thereof, which may be translated or mapped to pages in physical memory 114.

In examples, application 112 comprises executable code (e.g., software) installed on client computing device 102, a web browser, or other code that executed thereon. In some implementations, application 112 is accessible via a cloud. In some examples, application 112 comprises a user interface (UI) via which operations are inputted, such as operations to be performed on data. In some implementations, the UI receives queries, such as Structured Query Language (SQL) queries. In another embodiment, application 112 comprises a cloud application, such as a cloud database. In embodiments, application 112 comprises one or more user interactive controls (e.g., buttons, menus, alphanumeric input fields, icons, windows, etc.) that enables a user of client computing device 102 to interact with application 112. In various other implementations, application 112 receives such operations from another entity (e.g., a computing device not shown in FIG. 1, such as a remotely located entity). In examples, such operations comprises data operations, such as database operations, business intelligence operations, data processing, graphics editing, or any other type of operation that utilizes a transfer of data between different entities.

Kernel 104 comprises one or more programs of an operating system (OS) that is configured to manage system resources, among other things. In one example, the kernel is a program or collection of programs executed by the OS. In various examples, kernel 104 comprises a core part of the OS of client computing device 102. In embodiments, kernel 104 is configured to manage the central processing unit (CPU), memory (including physical memory), hardware peripherals, etc. of client computing device 102, including the operation and/or utilization of the foregoing. In some example embodiments, kernel 104 serves as an interface between different hardware and/or software components (e.g., applications) of client computing device 102. For instance, kernel 104 manages the interaction between application 112 and physical memory 114, among other things, to ensure proper functionality of application 112 (as well as other components of client computing device 102). In various examples, kernel 104 utilizes one or more drivers to interact with hardware components of client computing device 102.

In some environments, including but not limited to data center operations, SQL applications (e.g., SQL server), or other applications that operate on a large virtual address space (e.g., 2⁶⁴ on a 64-bit operating system) contiguous regions of virtual memory are utilized and kernel 104 is responsible for mapping such regions to physical memory pages (e.g., in a DRAM). Given that the available physical memory 114 on a computer is typically much less than the virtual memory utilized by application 112, kernel 104 performs an operation call paging in examples to keep the pages currently used by the process in physical memory 114 while swapping out the unused ones. Kernel 104 also coordinates the swaps that are needed to be performed over time, as the same physical pages are used across different processes as the processes transition between active and inactive states in examples. Accordingly, kernel 104 is configured to manage system resources such that a large memory space is provided for processes of the computing device to operate on. In accordance with disclosed embodiments, since RDMA relies upon pages that are pinned in physical memory, kernel 104 ensures the validity of the memory address until RDMA operations complete, thereby ensuring successful transfers of data.

In embodiments, kernel 104 operates in a kernel space of the OS. A kernel space comprises an area of an operating system where privileged operations are performed. In various examples, operations in the kernel space allow for access to memory and/or hardware of a computing system. In contrast, a user space refers to an area in which applications (e.g., user applications or processes) are executed. In various embodiments, a user space has reduced or no access to system resources (e.g., physical memory, hardware, etc.). Rather, applications executing in the user space rely on kernel 104 to coordinate the utilization of such resources. In examples, application 112 is executed in the user space. In various examples described herein, a user also refers to a user application executing in the user space.

Network interface device 108 comprises a hardware component of client computing device 102 configured to manage the input/output between client computing device 102 and other devices external thereto over network 116. In one example, network interface device 108 is a hardware network interface controller or card (NIC) that comprises a hardware device installed within client computing device 102 (e.g., installed onto and/or integral with a motherboard of client computing device 102, or installed in any other manner as appreciated by those skilled in the relevant art). In various embodiments, network interface device 108 enables client computer device 102 to connect to network 116 (which includes any combination of wired and/or wireless networks) and transmit data (e.g., send and/or receive data) over the network.

Network interface device 108 transmits data over network 116 in various ways, such as by transmitting data in accordance with one or protocols. Examples of such protocols include, but are not limited to, Internet Protocol (IP), Transmission Control Protocol (TCP), User Datagram Protocol (UDP), Hypertext Transfer Protocol (HTTP), File Transfer Protocol (FTP), Secure Socket s Layer (SSL), and other protocols as appreciated by those skilled in the relevant arts. In various embodiments, network interface device 108 is configured to perform one or more operations on data that is to be transmitted (e.g., a payload), such as by framing of headers, encapsulating the payload within a packet, etc., and/or sending the packet.

In various examples, network interface device 108 comprises a processor (e.g., an onboard processor and a physical memory. In some implementations, network interface device 108 comprises one or more programmable functions and/or memory. In one example, network interface device 108 comprises a programmable device, such as a Field Gate Programmable Array (FPGA) device.

Physical memory 114 comprises any memory of client computing device 102 that is configured to store, at least temporarily, data utilized by application 112 (or any other executable program of client computing device 102). In examples, physical memory 114 comprises a random access memory (RAM), such as a dynamic RAM (DRAM), synchronous DRAM (SDRAM), static RAM (SRAM), or any other RAM that is co-located on client computing device 102. In some implementations, physical memory 114 is configured to store data in the form of one or more pages (or page frames), as managed by kernel 104 (described in greater detail below). In various embodiments, the page size of each page is 4KB, or any other size based on client computing device 102.

In example embodiments, memory manager 106 is configured to manage the interaction between network interface device 108, application 112, and memory 114. For instance, memory manager 106 is configured to pin one or more pages of virtual memory utilized by application 112 to physical memory 114, based for instance on a request from application 112. In an example, memory manager 106 is configured to store a mapping between virtual memory utilized by application 112 and the corresponding pages in physical memory 114. Such a mapping is maintained in any suitable manner, such as by a map register, a page table, or any other technique as appreciated by those skilled in the relevant arts. In this manner, memory manager 106 pages in and/or pages out different portions of virtual memory (e.g., ranges of virtual memory addresses) utilized by application 112 (or any other application) into physical memory 114, such that physical memory is shared across different processes currently executing in the computing device (e.g. by swapping pages as needed).

As an illustration, memory manager 106 maintains a mapping of virtual address A (in a virtual address space) to physical address B (in a physical address space of physical memory 114) for process 1. At the same time, memory manager 106 maps virtual address C to the same physical address B for process 2. Memory manager 106 swaps in either virtual address A or virtual address C into physical address B depending on which virtual memory needs to be in the physical memory at a given point in time. In this manner, the same physical address space is shared across different processes based on memory manager 106 swapping pages in and out of memory as needed. However, once virtual memory is pinned to a given physical address, that physical address cannot be reused until the memory is unpinned and becomes available again.

In an example, if a process is making an access to a virtual address space, memory manager 106 will determine whether the virtual address space is currently mapped to a physical address space (e.g., based on the PTE). If the virtual address space is present in the physical memory, the process continues. If not, a page fault occurs. When a page fault occurs, memory manager 106 performs one or more additional actions, such as a page swap to bring the virtual address space (e.g., from a disk) into physical memory using one or more privileged operations at the kernel level. In examples, the page swap comprises removing one or more pages from physical memory to bring the desired virtual address space into physical memory. After such actions, the process that made the access continues. However, such actions constitute additional operations performed at the kernel level, which can degrade performance in some instances. In some instances, such additional operations lead to performance penalties and/or violations of service-level agreements (SLAs).

In accordance with various embodiments, memory manager 106 is configured obtain a request from application 112 to reserve a reserve a plurality of page table entries (or even a single page table entry) for application 112, without a corresponding request to map the page table entries to physical memory. Such a request can occur, for instance, where application 112 is attempting to transfer data using an RDMA operation. In such a scenario, memory manager 106 reserves a plurality of PTEs, but does not target the entries to any page in physical memory. In this manner, memory manager 106 reserves a range of addresses in a PTE for a given application, and maps that range of addresses (i.e., the entries in the PTE) to the application.

In examples, memory manager 106 transmit a request (e.g., through a call or the like) to network interface device 108 to reserve the plurality of entries in its page table (PT). As a result, network interface device 108 comprises a PTE with a plurality of entries that are reserved for application 112, but are not mapped to any pages in physical memory. In various examples, memory manager 106 programs network interface device 108 to reserve the plurality of entries in its page table. In accordance with various examples, as described in greater detail below, such a process is performed only once for a given application, which allows the same page table entries to be reused for different operations corresponding to the same application.

In examples, fast memory registration system 110 is configured to specify a memory region that it desires to have pinned to physical memory 114 (e.g., corresponding to a data buffer used by the user). In response, memory manager 106 is configured to pin the memory region to physical memory 114 and store the mapping in its PT and/or in the PT of network interface device 108. In various embodiments, memory manager 106 provides the application with a pointer referred to herein as a logical address memory (LAM) corresponding to the buffer.

In examples, fast memory registration system 110 is configured to bind a region of memory to a pointer indicative of the page(s) in physical memory 114. For instance, after application 112 obtains the pointer from memory manager 106 corresponding to the user's buffer, application 112 provides the pointer to network interface device 108 to perform a fast registration (e.g., a binding) of a region of memory (e.g., one or more entries of the PT previously allocated therein) to the pointer. In various examples, application 112 performs such a fast registration via a function call to fast memory registration system 110. In this manner, network interface device 108 is configured to map a memory region in its PT with a pointer indicative of a page location in physical memory 114. As discussed in greater detail elsewhere, such fast registration techniques are performed without requiring the kernel to reprogram the network interface device in various examples, allowing for improvements to the speed of memory registration.

In various embodiments, application 112 initiates an RDMA operation, such as by making one or more RDMA calls. In examples, an RDMA operation comprises a transfer of data (e.g., sending data, receiving data) over a network through a direct memory access. For instance, where application 112 makes a call to write data (e.g., a "write to" call) to a remote location (e.g., a different computing device, such as server 122), network interface device 108 is configured to access the pointer stored in its PT, allowing it to directly access the location in physical memory 114 where the data is stored. In examples, network interface device 108 obtains such data from physical memory 114 (e.g., without involving the kernel), and performs one or more operations on the data to transfer it (e.g., write) to another remote location, such as framing headers, encapsulating the payload within a packet, transferring the data, etc. at the hardware level of the device. In other words, network interface device 108 write the data to a remote location by directly accessing physical memory 114 in a manner that does not rely on the kernel, thereby enabling a faster transfer of data.

Server 122 comprises any number of computing devices such as a network-accessible server (e.g., a cloud computing server network), services, local processes, remote machines, web services, etc. that interacts with client computing device 102. In various examples, server 122 performs one or more processing operations on data obtained from client computing device 102. In some implementations, server 122 comprises a database server. In an example, server 122 comprises a group or collection of servers (e.g., computing devices) that are each accessible by a network such as the Internet (e.g., in a "cloud-based" embodiment). In example embodiments, server 122 is a computing device that is located remotely (e.g., in a different facility) from computing device 102. Server 122 comprises any number of computing devices, and includes any type and number of other resources, including resources that facilitate communications with and between servers, storage by the servers, etc. (e.g., network switches, storage devices, networks, etc.). In embodiments, devices of server 106 be co-located (e.g., housed in one or more nearby buildings with associated components such as backup power supplies, redundant data communications, environmental controls, etc.) to form a datacenter, or are arranged in other manners. Accordingly, in an embodiment, server 122 is a datacenter in a distributed collection of datacenters.

In example embodiments, server 122 comprises one or more components similar or identical to client computing device 102. In some examples, kernel 124, memory manager 126, network interface device 128, fast memory registration system 130, application 132, and physical memory 134 are example implementations of kernel 104, memory manager 106, network interface device 108, fast memory registration system 110, application 112, and physical memory 114, respectively. In some examples, application 132 comprises a server-side application, while application 112 comprises a client-side application. In various embodiments, memory manager 126 and fast memory registration system 130 perform a memory registration using similar techniques as described with respect to memory manager 106 and fast memory registration system 110, respectively.

In examples, client computing device 102 and server 122 perform RDMA operations using any combination of a local and/or remote token. For instance, memory registration as described herein provides the user (e.g., application 112 or application 132) with a local and a remote token. If application 112 (or any other process) on client computing device 102 (which can comprise a virtual machine (VM) in an implementation) performs a memory registration, it uses its local token to access the registered memory. Application 112 can also share a remote token with another process, such as application 132 on server 122 (which can comprise a VM) which can access one or more pages of physical memory 114 pinned by application 112 remotely using an RDMA technique. In examples, such access (which includes a read and/or write of data) is performed without involvement of kernel 104 (or an OS or the computer's CPU) for the I/O operation.

In examples, techniques disclosed herein are implemented using one or more kernel mode RDMA APIs (such as a native development kit (NDK)). For instance, with respect to storage APIs, disclosed techniques trap user-initiated memory mapped I/O operations in the kernel and/or pin the pages dynamically in memory. In other examples, disclosed techniques are implemented for user mode RDMA operations, such as operations that are exposed through a library (e.g., a network direct serial provider interface (NDSPI) library).

In various embodiments, client computing device 102 and server 122 interact using any combination of two-sided and one-sided RDMA transfers (also referred to herein as a two-sided verbs and one-sided verbs, respectively), depending for instance on whether both the initiator of the RDMA operation (also referred to herein as an I/O operation) and the target of the RDMA operation are active for an I/O operation or if the initiator is active while the target is passive. For instance, in a two-sided RDMA transfer, both the initiator and the target are involved in an I/O operation and use their respective local tokens for accessing their registered memory (e.g., registered in accordance with techniques disclosed herein). For instance, a first process executing on client computing device 102 would not possess knowledge of the memory that a second process executing on server 122 has registered, but the first process can still perform operations using its local token. In such an example, the second process is expected to post a receive operation using its local token for memory registered in server 122 before the first process can perform a send operation.

In contrast, in a one-sided RDMA operation (e.g. a read/write operation), the initiator is configured to obtain a remote token from the target (or peer that is involved in the RDMA operation). For instance, if a first process executing on client computing device 102 wants to perform a one-sided RDMA write to a memory that a second process executing on server 122 has registered, the first process would first obtain a remote token of the memory registered by the second process. Subsequently, the first process can directly write, via its network interface device, to the memory of the second process using a one-sided RDMA write (e.g., which bypasses the kernel on both devices). Similarly, the first process can also directly read (using at least its network interface device) from the memory of the second process using an RDMA read operation.

In various embodiments, one-sided RDMA operations therefore have certain advantages compared to two-sided RDMA operations. For instance, with one-sided RDMA operations, after both sides have registered their respective memories in accordance with disclosed techniques, an initiator is able to write or read data from the target based on a remote token and/or without intervention of the CPU/kernel of the target, thereby improving the data transfer speed. In other words, one side to the RDMA operation can perform a read or write of the memory of the other side of the RDMA operation, where the other side (e.g., the target) remains passive during the operation. This is in contrast to two-sided RDMA operations which involve multiple rounds of communication (e.g., a send call, a receive call, providing the location of a buffer, etc.) and CPU/kernel intervention on both sides.

While illustrative techniques are described herein with respect to one-sided RDMA operations, disclosed embodiments apply to both one-sided and two-sided RDMA operations.

Implementations are not limited to the illustrative arrangement shown in FIG. 1. For instance, any of the components shown in FIG. 1 are located in a same computing device, are co-located, or are located remote from each other. Furthermore, system 100 comprises any number of other devices, networks, servers, and/or computing devices coupled in any manner in various embodiments.

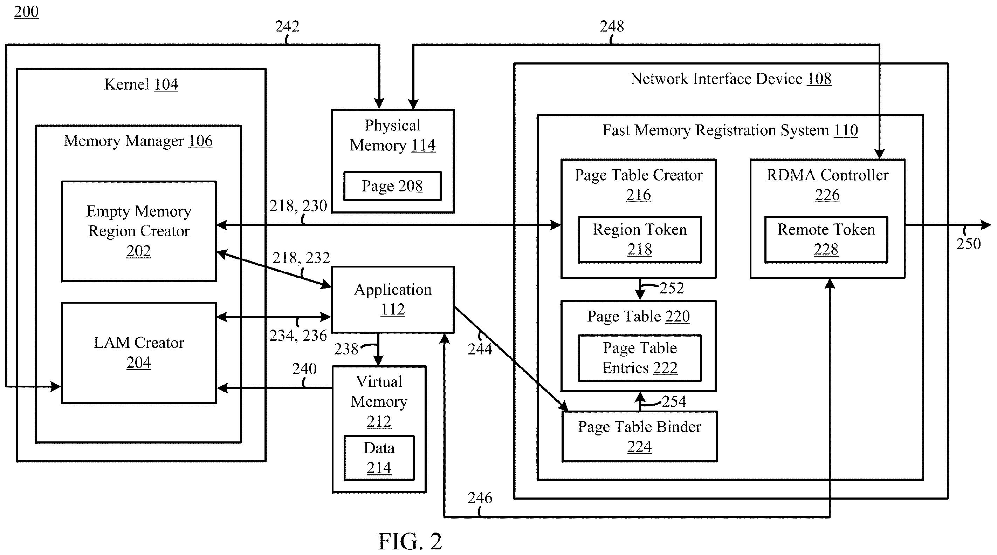

FIG. 2 depicts a block diagram of a system 200 for performing a memory registration, in accordance with an example embodiment. As shown in FIG. 2, system 200 comprises an example implementation of kernel 104, memory manager 106, network interface device 108, fast memory registration system 110, application 112, and physical memory 114. Memory manager 106 comprises an empty memory region creator 202, and a local address memory (LAM) creator 204. Fast memory registration (FMR) system 110 comprises a page table (PT) creator 216, a PT 220, a PT binder 224, and an RDMA controller 226. PT creator 216 comprises a region token 218. PT 220 comprises PT entries 222. RDMA controller 226 comprises a remote token 228. Physical memory 114 comprises a page 208. System 200 also comprises a virtual memory 212. As shown in FIG. 2, virtual memory 212 comprises data 214.

In example embodiments, application 112 utilizes 238 a set of data 214 stored in virtual memory 212. Data 214 comprises any type of information stored electronically on computing device 102, such as information stored on a hard disk, persistent storage, or other type of storage device. In various embodiments, data 214 comprises analytical data that is stored in a structured and/or unstructured format. In examples, data comprises one or more files, databases, documents, videos, images, scripts, source code, binary code, executables, etc.

In various examples, virtual memory 212 is separate from physical memory 114, as described herein. For instance, application 112 relies upon data 214 based on a virtual memory address (or range of addresses). In some implementations, application 112 causes memory manager 106 to pin data 214 (or a portion thereof) to one or more pages of physical memory 114, as discussed herein. In one illustration, application 112 causes data 214 to be pinned to physical memory 114 for purposes of performing an RDMA operation, such as a data transfer in which network interface device 108 directly accesses physical memory 114 to transfer data 214 to another remote location (e.g., over a network).

In an example embodiment, application 112 makes a call 232 to empty memory region creator 202 for a reservation of a number of PTEs. In an example, application 112 identifies the number of PTEs to be reserved in the call. In another example, empty memory region creator 202 determines the number of PTEs to be reserved based on the call initiated by application 112. In examples, the determination for the number of PTEs to be reserved is made in various ways, such as based on a data usage by application 112, the size of application 112, the amount of virtual memory utilized or planned to be utilized, etc. In other examples, the number of PTEs to be reserved comprises a predetermined number (e.g., a default number of PTEs). In yet a further example, the call comprises request to reserve an additional number of PTEs (e.g., where application 112 needs more PTEs than previously reserved).

In embodiments, empty memory region creator 202 is configured to create an empty memory region for application 112 based on the call initiated by application 112. In examples, the empty memory region comprises a number of entries in a PT reserved for application 112. In various examples, the empty memory region is assigned to application 112 and cannot be used by another application executing on computing device 102 until the memory region is no longer assigned to application 112 (e.g., upon termination of application 112, deregistration of the empty memory region, etc.). In this manner, empty memory region creator 202 is configured to reserve a number of entries in a PT for application 112 that are able to be utilized only by application 112.

In various example, the PTEs in the empty memory region are not mapped to any portion (e.g., pages) of physical memory 114. For instance, each entry in the range of PTEs for the empty memory region comprises a placeholder, such as a placeholder value that comprises a null value. Thus, while the PTEs are reserved for application 112, the PTEs do not yet point to any page in physical memory 114.

In various embodiments, empty memory region creator 202 makes a call 230 to page table creator 216 to create the empty memory region. In various examples, empty memory region creator 202 reprograms network interface device 108 (or a portion thereof) to create the empty memory region. For instance, page table creator 216 creates PTEs 222 in PT 220 based on the call received from empty memory region creator 202 (or the reprogramming, as discussed). In various embodiments, page table entries 222 comprises the empty memory region described herein (e.g., a memory region assigned to application 112 that comprises placeholder values). In some example, empty memory region creator 202 is present in fast memory registration system 110, such that application 112 makes call 232 to network interface device 108 rather than kernel 104.

In examples, each entry of PT 220 is configured to map logical address memory region to information indicative of a location of data in a physical memory (e.g., a page in physical memory 114). For instance, each PTE comprises a pointer indicative of a physical memory location. As discussed, the empty memory region is initially created where the mapping comprises placeholder values (e.g., the pointers comprise null values). Based on usage of application 112 and/or RDMA calls to be made, one or more of the PTEs are updated to reflect information indicative of a physical memory location, such that an RDMA call can be completed. Additional details regarding such functionality are described herein. In various embodiments, the mapping also comprises a pointer identifying the application associated with each PTE (e.g., a pointer identifying application 112 in an example), such that the entry is not usable for other applications (e.g., processes) executing on computing device 102.

In various examples, page table creator 216 creates region token 218 that identifies the empty memory region in PT 220. For instance, region token 218 identifies a region of PT 220 that were created based on call 232. In one example, region token 218 comprises a local memory token that identifies PTEs 222 that were reserved for application 112. In various implementations, page table creator 216 returns region token 218 to empty memory region creator 202. In an example, empty memory region creator 202 provides region token 218 to application 112, such that application 112 can utilize region token 218 to reference the empty memory region that was created in one or more subsequent calls.

In embodiments, application 112 seeks to initiate a transfer of data (e.g., data 214) to another remote destination in accordance with an RDMA technique (e.g., the transfer of data over a network in which network interface device 108 directly accesses the data from physical memory). While example embodiments are described here in which application 112 sends data 214 to a remote destination, embodiments are also contemplated in which network interface device 108 receives data from a remote source (e.g., over a network), where such data is sent based on a direct access of physical memory in accordance with the disclosed techniques. In addition, in such instances, embodiments are also contemplated in which network interface device 108 causes the received data to be stored in physical memory 114 directly (e.g., without routing the received data through kernel 104) in accordance with the disclosed techniques. Additional details regarding such examples are described elsewhere herein.

In an example, application 112 makes a call 234 to LAM (logical address memory) creator 204, such as to initiate an RDMA operation. In one example, call 234 comprises region token 218 that identifies the empty memory region created for application 112 and/or provided to application 112 previously. In various examples, call 234 also identifies a virtual address space (e.g., a region of virtual memory 212) that is to be used for an RDMA operation. For instance, the virtual address space identifies the region of virtual memory 212 that comprises data 214 to be transferred. In one implementation, the virtual address space comprises a range of virtual memory addresses. In another implementation, the virtual address space (e.g., virtual addresses used by application 112) comprises a virtual memory address and a length for which physical pages need to be pinned to physical memory 114 (e.g., in a DRAM by kernel 104 and/or an operating system). In various embodiments, the virtual address space identifies data 214 that is to be transferred and/or requested to be pinned to physical memory 114.

In examples, LAM creator 204 is configured to obtain 240 data 214 and create (e.g., build) a LAM region corresponding to data 214 (e.g., a buffer associated with application 112). In an embodiment, LAM creator 204 is configured to pin the pages behind the buffer (e.g., data 214) such that the buffer is pinned to page 208 (or a set of pages) in physical memory 114. In other words, LAM creator 204 is configured to pin 242 the memory requested by application 112 into physical memory 114. Upon pinning the pages of memory into physical memory 114, LAM creator 204 obtains an identification of the pages of physical memory 114 that correspond to the buffer. In examples, the identification of the pages of physical memory 114 comprises one or more pointers to physical memory locations, which can be sequential or non-sequential. In various examples, LAM creator 204 updates one or more entries of a PT of kernel 104 to map the virtual address space corresponding to data 214 and one or more pages of physical memory 114. In some implementations, LAM creator 204 updates PT 220 with such information.

In various implementations, LAM creator 204 returns a pointer 236 (e.g., a token or other identifier) to application 112 that identifies the LAM region corresponding to data 214. In various implementations, application 112 uses pointer 236 for one or more subsequent calls, such as an RDMA operation as described herein.

In embodiments, LAM creator 204 is configured to pin the pages behind the provided buffer and obtains bus-logical addresses (e.g., DMA-mapped, device-accessible addresses, etc.) or other physical addresses for the pages in physical memory 114 backing the buffer. In implementations, LAM creator 204 configures (e.g., generates and/or updates) one or more PTEs of a PT managed in the kernel space (e.g., in kernel 104) to map the LAM region to the bus-logical addresses or other physical addresses for the pages backing the buffer. In one example, LAM creator 204 provides pointer 236 to application 112 that identifies a pre-allocated memory region managed in kernel 104 where the LAM data is written (e.g., PTEs in the kernel space). For instance, pointer 236 identifies one or more logical addresses (e.g., a single address or a range of addresses) of a PT managed by kernel 104 that correspond to the LAM for which the buffer was pinned to physical memory 114. In some examples, pointer 236 comprises a 16 byte (or other size) value that is accessible by network interface device 108 (e.g., an RDMA controller therein). In one implementation, pointer 236 cannot be dereferenced by a user (e.g., of application 112). In accordance with various embodiments, the user utilizes pointer 236 when submitting a fast memory registration request to the network interface device, as described in greater detail elsewhere herein. In other examples, pointer 236 identifies the bus-logical addresses or other physical addresses for the pages in physical memory 114 backing the buffer.

In example embodiments, application 112 makes a call 244 to page table binder 224 to fast register a queue pair comprising region token 218 and pointer 236. In some implementations, call 244 is performed using a special work request queue, similar to send and receive queues application 112 utilizes for communication requests. In examples, call 244 comprises a request to bind (e.g., configure) one or more PTEs 222 that were reserved previously to information indicative of a physical memory location of data 214. In examples, the information indicative of the physical memory location comprise an identification of the LAM as created by LAM creator 204 for the physical pages backing the buffer (e.g., as specified by pointer 236).

For instance, PT binder 224 is configured to bind the LAM (as built by LAM creator 204) to any of PTEs 222 that were reserved for application 112 previously. In examples, as discussed herein, the bind request (e.g., call 244) for a fast memory registration comprises pointer 236 that references the LAM and region token 218 that identifies the previously allocated empty memory region. In various embodiments, binding of PTEs 222 based on call 244 comprises replacing one or more placeholders in the PTEs with pointer 236 (or other information indicative of the physical memory location).

In examples, application 1112 provides a call 246 to RDMA controller 226 to initiate an RDMA transfer. In examples, RDMA controller 226 is configured to coordinate and/or manage the input/output of data of network interface device 108 using one or more RDMA techniques (e.g., direct memory accesses). In implementations, call 246 identifies the data to be transferred (e.g., using one or more pointers, such as a virtual address corresponding to data 214 and/or one or more of PTEs 222 corresponding to the LAM) and/or a destination (e.g., by a network address, such as an Internet Protocol address, or any other address as appreciated by those skilled in the relevant arts). In response, RDMA controller 226 is configured to access the PT managed in kernel 104 based on pointer 236 that contains the LAM reference. Based on identifying the LAM reference in the PT, RDMA controller 226 identifies the location of the physical pages (e.g., page 208 or any additional pages) of physical memory 114 backing the buffer that is to be transferred.

In implementations, RDMA controller 226 reads 248 the buffer from physical memory 114 directly (e.g., without transferring the data through kernel 104). In various embodiments, RDMA controller 226 transmits 250 the pages (e.g., the buffer) to a destination, such as another computing device, node, virtual machine, etc. In various examples, RDMA controller is configured to cause a corresponding RDMA controller at the destination to write the pages directly to a physical memory at the destination (e.g., based on a reservation of a memory region to which data is to be written). In this manner, data in physical memory 114 is transferred from one entity to a physical memory of another entity directly (e.g., without transferring the data through a kernel either at the source or the destination), thereby allowing for a quicker transfer of data.

Upon completion of the transfer of data, RDMA controller 226 is configured to generate a completion notification in some implementations. In examples, RDMA controller 226 is configured to provide a signal to PT binder 224 to deregister the binding between one or more PTEs 222 and the LAM region that were previously registered in response to the completion notification. In such instances, the one or more PTEs 222 revert to comprising placeholder values, rather than references to the LAM. In a further implementation, in response to a completion notification, RDMA controller 226 provides a signal to LAM creator 204 indicating the completion of the transfer, causing LAM creator 204 to deregister the LAM and/or free up the previously used pages in physical memory 114 for use by one or more other processes.

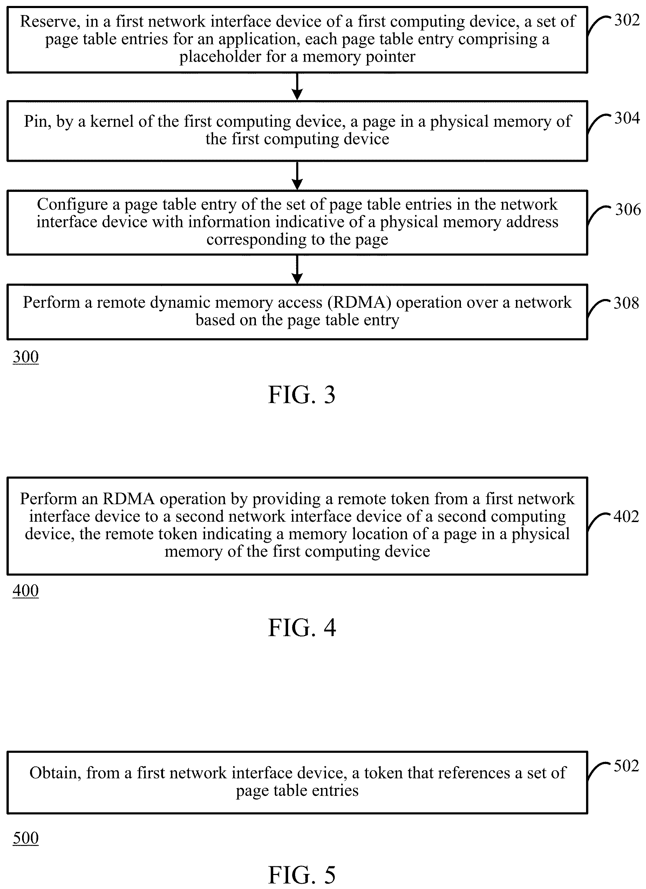

In accordance with one or more embodiments, memory registration is performed in an enhanced fashion in various ways. For example, FIG. 3 shows a flowchart 300 of a method for registration of a memory, in accordance with an example embodiment. In an embodiment, flowchart 300 is implemented by system 100 as shown in FIG. 1 and/or system 200 as shown in FIG. 2. Accordingly, flowchart 300 will be described with reference to FIGS. 1 and 2. Other structural and operational embodiments will be apparent to persons skilled in the relevant art(s) based on the following discussion regarding flowchart 300, system 100 of FIG. 1, and system 200 of FIG. 2.

Flowchart 300 begins with step 302. In step 302, a set of page table entries for an application is reserved in a first network interface device of a first computing device, where each page table entry comprises a placeholder for a memory pointer. For instance, with reference to FIG. 2, empty memory region creator 202 is configured to reserve PTEs 222 in PT 220 of network interface device 108. In examples, network interface device 108 is part of computing device 102, which comprises any type of computing entity (e.g., a computing device, machine, node, virtual machine, server, etc.). In various embodiments, network interface device comprises a FPGA device, System on a Chip (SoC) device, or other type of hardware and/or software. In implementations, application 112 provides call 232 to empty memory region creator 202 to reserve the PTEs in network interface device 108.

In some example embodiments, call 232 is provided as a one-time operation (e.g., only provided a single time) during the execution of application 112, such as during an initial startup of thereof, at the initiation of a first RDMA operation, or based on any other trigger. In some implementations, application 112 provides call 232 based on a user input, such as a request from a user to create a fast or empty memory region. In examples, since the reservation of PTEs 222 is typically the most expensive step during memory registration (e.g., due to relying on a relatively slower processor in network interface device 108 and/or reprogramming one or more functions of network interface device 108), reducing the number of times the initial memory registration step is performed results in a latency reduction when performing RDMA operations (e.g., memory registration in which PTEs are reserved in the network interface device need not be performed for each individual RDMA operation, but rather can be performed a single time for an application and re-used for a plurality of RDMA operations associated with the application).

In implementations, the reserved PTEs 222 comprises an empty memory region (e.g., where pages are not yet pinned to memory). Each of the reserved PTEs 222 comprises, at least initially, a placeholder for a memory pointer in examples. As discussed elsewhere, the placeholder is replaced with a reference to a LAM when an RDMA operation is initiated. Thus, in various embodiments, the reservation of PTEs 222 is performed prior to pinning a page in physical memory 114 (e.g., by application 112). For instance, the reservation of PTEs 222 does not cause data 214 (or other data that is to be transferred) to be pinned to physical memory 114, or cause one or more pages of physical memory 114 to be reserved for writing data (such as in instances where computing device 102 receives an RDMA transfer from another entity). Such pinning is performed, for instance, after the PTEs are allocated and configured with placeholder values.

As discussed herein, empty memory region creator 202 is configured to allocate a LAM region and returns region token 218 (e.g., a pointer, also referred to herein as m_pMr) to application 112 for one or more subsequent calls by application 112 in examples. In an embodiment, empty memory region creator 202 specifies a number of PTEs (e.g., *N* PTEs) to reserve in PT 220 in network interface device 108, such as by providing a request to the network interface device to create such a region using call 230. In one implementation, the number of N PTEs to be reserved are specified by application 112 and/or based on a user input. At the kernel level (e.g., in kernel 104), an empty memory region is created (e.g., in a PT of kernel 104 and/or in PT 220), resulting in an allocation of a free or empty memory region (e.g., without pinning pages to physical memory 114) with N free PTEs. In an example, each PTE would point to a particular page in physical memory 114 (e.g., a 4K page in physical memory) once the pages are pinned. However, during the initial registration (e.g., the creation of the empty memory region), the reservation of PTEs is performed without tagging any virtual memory address(es) and therefore does not pin any pages in the physical page space (e.g., in physical memory 114). As noted above, PTEs 222 are tagged to application 112 (or any other process that initiated the reservation of the PTEs) and therefore cannot be used by other processes until PTEs 222 are deregistered.

In step 304, a page is pinned in a physical memory of the first computing device by a kernel of the first computing device. For instance, with reference to FIG. 2, LAM creator 204 of kernel 104 is configured to pin page 208 (or a plurality of pages) in physical memory 114. In various embodiments, application 112 provides call 234 to LAM creator 204 to pin the page(s) to physical memory 114, such as for purposes of dynamically registering memory to perform an RDMA operation. In one implementation, application 112 specifies a user buffer in virtual memory 212 (e.g., that contains data 214) that is to be pinned to physical memory 114. For instance, application 112 specifies (e.g., based on a user input or another trigger) the buffer by identifying a virtual memory address and the address length for which the physical pages need to be pinned in the physical memory (e.g., in physical memory 114 by LAM creator 204 and/or the operating system). In another example, application 112 specifies the buffer by identifying a range of virtual addresses. In another implementation, application 112 provides a call to LAM creator 204 to pin page(s) to physical memory 114 for purposes of receiving an incoming RDMA transfer (e.g., from another entity). In the above manner, LAM creator 204 performs an on-demand pinning of memory, based on one or more calls from application 112.

In implementations, LAM creator 204 pins one or more pages in physical memory 114 as requested (e.g., corresponding to the virtual address and/or length provided by application 112). In examples, LAM creator 204 also configures one or more PTEs (e.g., a in a PT managed in kernel 104) to map a region (e.g., a LAM) to the pages in physical memory 114 backing the user's buffer. In various embodiments, LAM creator 204 returns pointer 236 (also referred to herein as m_pLam) that references the LAM to application 112 for use thereof in one or more subsequent calls or requests.

In step 306, a page table entry of the set of page table entries in the network interface device is configured with information indicative of a physical memory address corresponding to the page. For instance, with reference to FIG. 2, page table binder 222 is configured to send a signal 254 to configure one or more of PTEs 222 with information indicative of a physical memory address corresponding to the page (or pages) that were requested to be pinned by application 112, such as page 208. In examples, the information indicative of the physical memory address comprises pointer 236 (e.g., a reference to the LAM created by LAM creator 204). In other examples, the information comprises the physical memory address of the one or more pages.

In various examples, page table binder 224 performs a fast registration for a queue pair using m_pLam and m_pMr, as discussed herein. In embodiments, the fast registration is performed using a function call 244 from application 112 to page table binder 224. In implementations, page table binder 224 maps one or more entries of PTEs 222 to pointer 236. In this manner, the previously allocated PTEs 222 in network interface device 108 are used for the memory region referencing the pages in physical memory 114. Stated differently, once application 112 obtains pointer 236 from LAM creator 204, application 112 is enabled to bind the pointer 236 to any one or more of PTEs 222 that were allocated or reserved for application 112 previously. In implementations, such a fast registration (e.g., binding) is performed with reduced latency (e.g., on the order of 2ms) compared to the initial allocation or reservation of PTEs (e.g., on the order of 200ms). Thus, while the initial allocation takes longer in examples, the fast registration of particular memory regions (which can be performed multiple times for different data buffers using the same allocation of PTEs) is performed in a quicker fashion, resulting in an overall reduction in RDMA I/O operations (e.g., as more RDMA operations for the same application take place).

In step 308, a remote direct memory access (RDMA) operation is performed over a network based on the page table entry. For instance, with reference to FIG. 2, RDMA controller 226 performs a transfer of data using a RDMA operation over network 116 based on one or more PTEs 222 that were configured (e.g., with pointer 236). In other words, an RDMA operation over the network is performed for the queue pair m_pLam and m_pMr using the fast memory registered address in examples. In various embodiments, RDMA controller 226 performs the RDMA operation (e.g., sending data to another computing device or receiving data from another computing device) based on a request 246 from application 112 on the same computing device. In other embodiments, RDMA controller 226 performs the RDMA operation based on a request from another computing device that initiated the operation.

In examples, RDMA controller 226 is configured to fetch data using a direct memory access read request. In one embodiment, RDMA controller 226 fetches (e.g., reads) data from page 208 (or one or more additional pages) in physical memory 114. Upon fetching the data from the page of physical memory, RDMA controller 226 transfers the data to another computing device over network 116 using RDMA techniques (e.g., by causing the data to be transferred to a physical memory of another computing device based on remote token 228 received from the other computing device).

In another embodiment, RDMA controller 226 fetches data from a page of physical memory in another computing device, such as physical memory 134 of server 122. In embodiments, RDMA controller 226 reads the PTs behind pointer 236 (i.e., the LAM reference) and identifies the buffer of the fast memory region (e.g., the user's buffer pinned in one or more pages of physical memory 114 used by application 112). In one example, RDMA controller 226 writes the fetched PTs (e.g., the data fetched from another computing device's physical memory) into the PT buffer of the fast memory region in physical memory 114. In this manner, data is transferred from the physical memory of one computing device to the physical memory of another computing device without transferring the memory through the kernel of either computing device, thereby improving the transfer speed. In examples, once RDMA controller 226 completes the transfer, RDMA controller 226 generates a completion notification indicating that the transfer competed successfully.

In embodiments, the pinning of memory (e.g., step 304), configuring of a previously allocated PTE (e.g., step 306), and performing an RDMA operation (e.g., step 308) are performed a plurality of times (e.g., for different RDMA transfers) for the same set of allocated PTEs that were reserved for application 112. In examples, one or more of the techniques described in steps 304, 306, and 310 are collectively referred to as a fast memory registration (FMR). While the initial reservation of PTEs is performed only once in examples, the reserved PTEs are usable for multiple different RDMA I/O operations that are to be performed. For instance, the same set of initially allocated PTEs are able to point to different memory regions at different points in time, without having to perform an entire registration procedure for each individual operation or transfer. As the pinning of memory and configuration of a previously allocated PTE are performed relatively quickly (e.g., on the order of 17ms), the pinning/registration for I/O operations is performed faster compared to conventional techniques in which the NIC is programmed initially with a mapping between a virtual address and a physical memory address (which cannot be reused for different RDMA operations). In this manner, the latency for pinning/registration is minimal and/or has a minimal impact on the operations at the application level.

In addition, as discussed in greater detail elsewhere herein, such techniques minimize or avoid the likelihood of a page fault occurring, which further improves the data transfer process and speed. In contrast, conventional techniques allow for page faults to occur, after which the kernel is involved to handle the faults through complex mechanisms, resulting in a slowdown of the transfer and/or possible rollback/retry of the transfer in some instances (e.g., where operations must be performed as an atomic unit). In accordance with the disclosed techniques, application 112 has control in ensuring that memory used by the application is pinned before an RDMA I/O operation is performed, thereby minimizing or even avoiding page faults altogether.

For instance, with other techniques, a page is able to be swapped out while an RDMA operation is being performed. Such a swap can occur, for example, based on a kernel's management of the utilization of hardware resources. Without pinning, the pages would be replaced by the kernel and the kernel would update the mapping as needed. As a result, a page fault can occur (e.g., where the page relied upon by an RDMA operation is no longer in physical memory), requiring the kernel to implement various types of complex recovery measures to allow the RDMA operation to complete, such as by bringing the page back into physical memory. In contrast, the disclosed techniques enable the pages to remain pinned until the operation is completed, thereby allowing RDMA operations to complete and improving overall performance.

In some CPU intensive environments, like SQL server, a large number of SQL server processes (e.g., 1000s of processes) are concurrently executing on a VM that share memory and CPU in an over subscription model. As a result, frequent process swaps occur to cater to the increased workload. In other techniques, a process has to reserve memory on the DRAM at the same time NIC is programmed. Since the physical memory is pinned to the process, the available physical memory for other processes in the VM is impacted. In accordance with FMR techniques described herein, the processes only reserve the PTEs on the network interface device initially (which does not result in pinning of any memory). Rather, memory is pinned when needed (e.g., during an actual RDMA operation) and only pinned for the duration of the operation (e.g., the RPC/connection) instead of remaining pinned for the lifetime of a process. Such techniques therefore improve scalability in such environments, allowing for an increased number of processes to execute concurrently on a computer or VM.

In addition, since the application controls the memory registration, a large page transfer (e.g., 64KB) is still able to be performed even if either side of the RDMA operation is able to commit a smaller total page size (e.g. 8KB) to physical memory. For instance, disclosed techniques allow for the dynamic pinning and unpinning memory during the course of an I/O operation and the reuse of the same PTEs to map to different regions of memory at different points of time.

Still further, disclosed techniques allow for ensuring that one-sided RDMA operations reach completion without involvement of the kernel or CPU during the I/O operation. In contrast, other techniques do not provide such assurances and thus incur performance penalties that will get exacerbated during heavy CPU load and multiple concurrent process execution.

In accordance with one or more embodiments, RDMA controller 226 is configured to transfer data from a physical memory of another computing device. For example, FIG. 4 shows a flowchart 400 of a method for performing an RDMA operation using a remote token, in accordance with an example embodiment. In an embodiment, flowchart 400 is implemented by system 100 as shown in FIG. 1 and/or system 200 as shown in FIG. 2. Accordingly, flowchart 400 will be described with reference to FIGS. 1 and 2. Other structural and operational embodiments will be apparent to persons skilled in the relevant art(s) based on the following discussion regarding flowchart 400, system 100 of FIG. 1, and system 200 of FIG. 2.

Flowchart 400 begins with step 402. In step 402, an RDMA operation is performed by providing a remote token from a first network interface device of a first computing device to a second network interface device of a second computing device, where the remote token indicates a memory location of the page in the physical memory of the first computing device. For instance, with reference to FIG. 2, RDMA controller 226 provides remote token 228 to a network interface device (e.g., network interface device 128) of a second computing device (e.g., server 122), where remote token 228 indicates a memory location of page 208 in physical memory 114. In examples, remote token 228 indicates the location of the buffer of application 112 that is pinned to physical memory 114, in accordance with disclosed techniques. In one implementation, remote token 228 comprises pointer 236. In another implementation, remote token 228 identifies one or more PTE entries 222 that contains information indicative of the application's buffer pinned to physical memory 114.

For instance, upon providing remote token 228 to another computing device, the network interface device of the other computing device is able to perform an RDMA operation in which data is transferred from a physical memory of the other computing device to the application's buffer pinned to physical memory 114 based on the information contained in token 228. In examples, such a transfer is performed without transferring or routing the data through kernel 104, thereby improving the data transfer speed.

In some other implementations, remote token 228 is obtained from another computing device and indicates a memory location of a page in the physical memory of the other computing device, such that RDMA controller 226 is able to fetch (e.g., read) data from page 208 (or pages) of physical memory 114 and transfer (e.g., write), using RDMA, the page(s) to one or more pages of physical memory of the other computing device in accordance with disclosed techniques.

As disclosed above, empty memory region creator 202 is configured to cause a set of PTEs to be reserved for application 112 in accordance with an embodiment. For example, FIG. 5 shows a flowchart 500 of a method for obtaining a token referencing the PTEs, in accordance with an example embodiment. In an embodiment, flowchart 400 is implemented by system 100 as shown in FIG. 1 and/or system 200 as shown in FIG. 2. Accordingly, flowchart 500 will be described with reference to FIGS. 1 and 2. Other structural and operational embodiments will be apparent to persons skilled in the relevant art(s) based on the following discussion regarding flowchart 500, system 100 of FIG. 1, and system 200 of FIG. 2.

Flowchart 500 begins with step 502. In step 502, a token that references the set of page table entries is obtained from a first network interface device. For instance, with reference to FIG. 2, page table creator 216 is configured to send a signal 252 to allocate PTEs 222 based on a call 230 from empty memory region creator 202. Upon allocating PTEs 222 to application 112, page table creator 216 generates region token 218 that references the empty memory region that was allocated (e.g., PTEs 222) in network interface device 108. In implementations, empty memory region creator 202 and/or application 112 obtains region token 218 in accordance with disclosed embodiments, such that application 112 can utilize region token 218 in one or more subsequent calls as described herein.

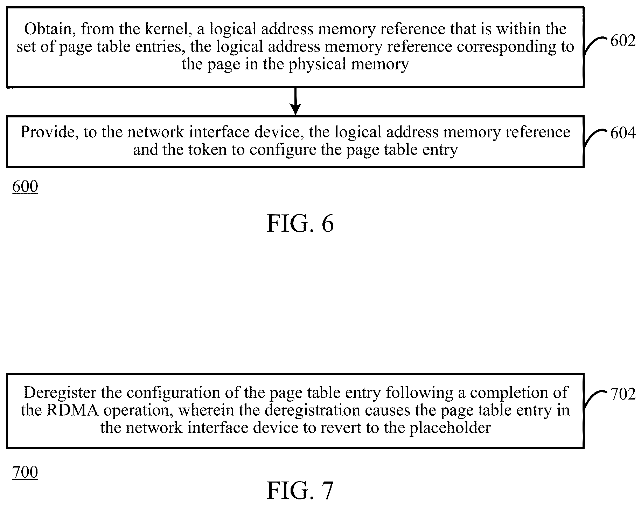

As disclosed above, PTEs 222 are configured in various ways when performing an RDMA operation. For example, FIG. 6 shows a flowchart 600 of a method for configuring a PTE of a network interface device, in accordance with an example embodiment. In an embodiment, flowchart 600 is implemented by system 100 as shown in FIG. 1 and/or system 200 as shown in FIG. 2. Accordingly, flowchart 600 will be described with reference to FIGS. 1 and 2. Other structural and operational embodiments will be apparent to persons skilled in the relevant art(s) based on the following discussion regarding flowchart 600, system 100 of FIG. 1, and system 200 of FIG. 2.

Flowchart 600 begins with step 602. In step 602, a logical address memory reference that is within the set of page table entries is obtained from the kernel, where the logical address memory reference corresponds to the page in the physical memory. For instance, with reference to FIG. 2, application 112 obtains from LAM creator 204 of kernel 104, pointer 236 that comprises logical address memory reference corresponding to page 208 that was pinned in physical memory 114. In examples, the logical address memory is within a logical address memory region corresponding to PTEs 222. For instance, where PTEs 222 encompass a logical address memory region (e.g., a range of address), the logical address memory reference obtained from LAM creator 204 is within the region in some example embodiments.

In step 604, the logical address memory reference and the token are provided to the network interface device to configure the page table entry. For instance, with reference to FIG. 2, application 112 provides pointer 236 comprising the logical address memory reference and region token 218 to page table binder 224 to configure one or more of PTEs 222. In examples, application 112 provides this queue pair to perform a fast registration of one of the previously allocated PTEs, after which an RDMA operation is performed in examples.

As disclosed above, RDMA controller 226 provides a completion notification upon completion of an RDMA operation, which results in a deregistering of a memory registration in various embodiments. For example, FIG. 7 shows a flowchart 700 of a method for deregistering a configuration of a page table entry, in accordance with an example embodiment. In an embodiment, flowchart 700 is implemented by system 100 as shown in FIG. 1 and/or system 200 as shown in FIG. 2. Accordingly, flowchart 700 will be described with reference to FIGS. 1 and 2. Other structural and operational embodiments will be apparent to persons skilled in the relevant art(s) based on the following discussion regarding flowchart 700, system 100 of FIG. 1, and system 200 of FIG. 2.

Flowchart 700 begins with step 702. In step 702, the configuration of the page table entry is deregistered following a completion of the RDMA operation, wherein the deregistration causes the page table entry in the network interface device to revert to the placeholder. For instance, with reference to FIG. 2, RDMA controller 226 generates a completion notification following completion of an RDMA operation (e.g., a read operation or a write operation). In examples, the completion notification is provided to page table binder 224 which causes page table binder 224 to deregister the previously configured page table entry in PT 220. For instance, if a particular one of PTEs 222 was bound to a memory region based on a fast memory registration as described herein, the PTE is deregistered (or unbound) following a completion of the operation. In various examples, the deregistration causes the PTE to revert to comprising a placeholder (e.g., a null value that does not point to any page in the physical memory) for the memory pointer, rather than pointer 236 that was previously registered. In this manner, PTEs 222 are still present in network interface device 108 following the completion of the RDMA, but one or more of the PTEs used for the RDMA operation are reset (e.g., decoupled) such that the PTEs can be reused for subsequent RDMA transfers by the same application.

Thus, in example embodiments, when an I/O operation completes, pages that were dynamically registered through fast memory registration as described herein are able to be deregistered. In some implementations, when the user (e.g., application) desires to unpin pages from memory (e.g., upon completion of an operation), application 112 invalidates the fast memory registration using an invalidate work request to page binder 224 which comprise a request to undo the memory registration. In examples, the invalidate work request comprises an identification of pointer 236 and/or region token 218. In response, page binder 224 cleans or deregisters the PTs of the provided pointer.

In some examples, application 112 provides a request to LAM creator 204 to unpin the pages from physical memory upon completion of an I/O operation. In such an example, LAM creator 204 destroys the LAM that was previously created and pointer 236 that references the LAM is released. In this manner, the pages are released from physical memory 114, allowing the pages to be used by one or more other processes executing on the computing device. In contrast to other techniques in which the entire PT on the network interface card had to be deregistered, disclosed techniques enable the retention of the PTs, while also releasing the pages from physical memory, following completion of an RDMA operation.

### III. Additional Example Query Execution Embodiments

The following paragraphs are intended to describe additional example embodiments in which implementations described herein may be provided. Furthermore, the paragraphs that follow explain additional context and details for such example embodiments. The paragraphs that follow are intended to illustrate various aspects, environments, and/or benefits relating to the techniques described herein, and are not intended to be limiting. Accordingly, while additional example embodiments are described, it is understood that the features described below are not required in all implementations.

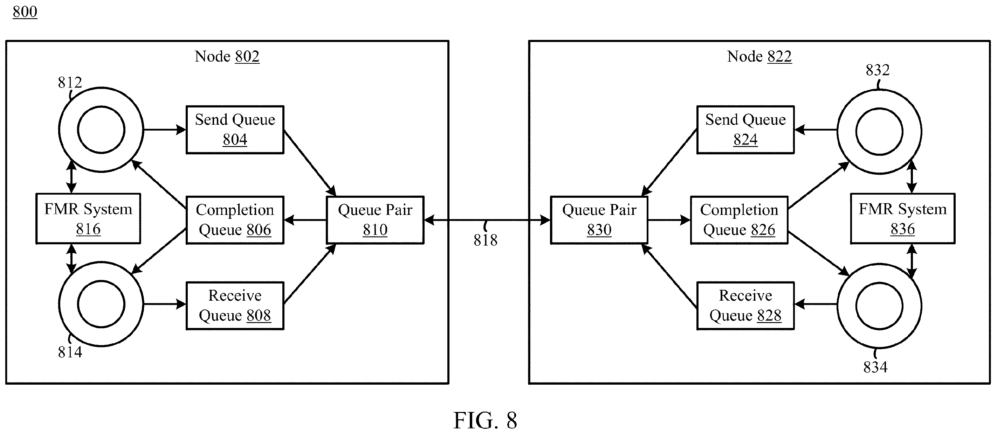

For instance, FIG. 8 shows a block diagram of a memory registration system 800 that implements one or more of the disclosed techniques, according to an example embodiment. As shown in FIG. 8, system 800 includes a node 802 and a node 822 coupled via a connection 818. Node 802 comprises a send queue 804, a completion queue 806, a receive queue 808, a queue pair 810, a send ring buffer 812, a receive ring buffer 814, and an FMR system 816. Node 822 comprises a send queue 824, a completion queue 826, a receive queue 828, a queue pair 830, a send ring buffer 832, a receive ring buffer 834, and an FMR system 836. In examples, FMR system 816 and FMR system 826 are example implementations of FMR system 110. Although not expressly shown, node 802 and/or node 804 includes one or more additional features described herein, including but not limited to a kernel that includes a memory manager (e.g., memory manager 106, a network interface device, an application, and a physical memory. In examples, node 802 and node 822 are examples of client computing device 102 and/or server 122.

In example embodiments, a network direct serial provider interface (NDSPI) is used to expose the underlying RDMA constructs in terms of connections and streams. A connection, such as connection 818 (e.g., a reliable connection) refers to a combination of a connector, completion queues and/or queue pair objects in accordance with RDMA techniques. In various examples, a queue pair is mapped to a respective connection, such that a 1:1 mapping exists between the two. In embodiments, a stream refers to parallel threads of execution that are multiplexed over a connection. In accordance with disclosed embodiments, send ring buffer 812 and receive ring buffer 814 are allocated from a registered memory region (e.g., in accordance with techniques described herein) for the queue pair associated with a connection. In an example, the requests for multiple streams will be coalesced and/or copied to receive ring buffer 814 to perform an RDMA operation (e.g., an RDMA write-with-immediate operation).

In example embodiments, memory registration (e.g., the initial allocation of PTEs for a given process) needed for each connection is performed as the connections are opened. In some examples, the memory registration will be deregistered when the connection is closed or terminated. In this manner, a same set of PTEs can be used by multiple virtual addresses at different points of time during the execution of a process. In other words, the same process and/or same connection is able to reuse the same set of PTEs in accordance with disclosed techniques, such as to transfer different items of data during the pendency of the connection. In contrast to other techniques, such a reuse of PTEs is not possible, as the registration in a NIC requires a 1:1 mapping between an address (e.g., a virtual address) and a physical memory pointer, such that the PT pointer cannot be reused once assigned.

In an embodiment, ring buffer offset information is exchanged between node 802 and node 822. In one example, each queue pair will have two pages (e.g., 4KB pages) registered by default on node 802 and node 822 for two ring buffers used for sends and receives respectively (e.g., send ring buffer 812, receive ring buffer 814, send ring buffer 832, and receive ring buffer 834). In an example, the queue pair comprises a configurable value when the connection endpoint is established. Since RDMA techniques requires registered memory to operate in various embodiments, a section of virtual address space is registered and pinned in the physical memory so that RDMA operations (e.g., by an RDMA controller in a network interface device) can access the physical memory directly, e.g. without CPU/kernel intervention for performing an I/O operation and/or without transferring data through the CPU/kernel. With fast memory registration techniques as described herein (e.g., by FMR system 816 and/or FMR system 836), the memory registration for each of the ring buffer (e.g., send ring buffer 812, receive ring buffer 814, send ring buffer 832, and receive ring buffer 834) is performed upon establishing the connection (e.g., after the connection is established) and/or unregistered when the connection is terminated. In other words, when the connection is established, a section in memory is dynamically reserved in accordance with disclosed techniques and used as one or more ring buffers when performing RDMA operations over the connection. When the connection is destroyed, the memory is unregistered, thereby freeing up the memory for other processes on each node.

An illustration is described in which node 802 sends data to node 822. It should be understood that similar techniques are utilized in other situations as well, such as where node 822 sends data to node 802. In an example, the data to be transmitted by node 802 is present in send buffer 812 and is provided through send queue 804. An RDMA controller of a network interface device of node 802 (not shown) sends the data across connection 818 to receive ring buffer 834. In examples, node 822 receives a notification of the transfer through receive queue 828. In an embodiment, completion queue 826 generates a completion notification indicating that the transfer was completed. In examples, the completion notification is provided to completion queue 826 indicating that the transfer was completed. Upon completion of the transfer, the FMR corresponding to the transfer is decoupled (e.g., by providing the completion notification to FMR system 816), allowing send ring buffer 812 to be reused for one or more subsequent RDMA operations.

A remote procedure call (RPC) is implemented in various examples using 2-sided verbs (e.g., send/receive). In some instances, an RPC comprises posting a receive with a sufficient buffer size for the sent data to be received. In some other implementations, an RPC protocol is utilized using 1-sided RDMA writes where each end (e.g., node 802 and/or node 822) maintains a receive ring buffer where the other end would perform a write at the next available offset. Since the write operation is passive on the target node, a write-with-immediate option is used in some implementations where the receiver (e.g., the target) would still post an RDMA receive on its end, but with an empty payload. In implementations, the receiver is notified when the sender completes a write and consumes the data from the receive ring buffer. In some examples, large data transfers occur between the nodes, such as page transfers. In SQL, for instance, where transfers are typically large, FMR techniques described herein enable a direct transfer of data between two nodes. As discussed herein, such registration and/or transfer occurs with a reduced (or no) likelihood of incurring page faults that require a complex recovery and/or handling by the kernel, allowing the transfer of pages to occur without any kernel/CPU intervention in examples. For instance, when a page fault occurs, the kernel/CPU are involved to bring the requisite page into physical memory and/or perform other remediation actions, which impacts the overall performance of the data transfer. By ensuring that memory is pinned during an RDMA operation in accordance with disclosed techniques, such page faults can be minimized or even avoided, resulting in faster data transfers (e.g., without CPU/kernel involvement). In addition, since many types of transactions rely on as bulk data transfers and/or are to be performed as a single atomic unit, reducing page faults is further advantageous as such transactions are likely to be successful in the first instance (rather than requiring retries due to page faults or other issues).

In another illustration, an RPC workflow is described in which a page transfer occurs using two unidirectional RPCs. In the illustration, a page transfer is performed using two unidirectional RPC messages between node 802 and node 822. In the example, the page (or pages) would be registered on-demand using FMR techniques as described herein, and the page data would be written directly from the source to the target locations using 1-sided RDMA writes. For instance, if an application or processed reserved a sufficient number of PTEs in accordance with disclosed techniques, multiple pages (e.g., 8KB pages) could be transferred using a single 1-sided RDMA write. For this example, node 802 acts as a client and node 822 acts as the server. This example is only illustrative, and other implementations are also possible as should be appreciated by those skilled in the relevant arts.

In this example, the workflow would use two different connections, one from node 802 to node 822, and another from node 822 to node 802 for the unidirectional RPCs. Similarly, an RDMA workflow uses 2 different connections and associated queue pairs, ring buffers, etc. as shown in FIG. 8 to perform this operation in an embodiment. In this example, it is assumed that both connections have been created and/or the token information for the ring buffers are shared between the nodes.

The following paragraphs describe an example workflow in which a page fetch by node 802 from node 822 is performed. It should be understood that page writes can also be performed (e.g., by node 802 to node 822), and/or the roles of node 802 and node 822 are reversed (e.g., node 822 performs the page fetch and/or page write).

In an example, both nodes would have memory registered in accordance with FMR techniques described herein for their respective ring buffers (e.g., upon establishing a connection between the nodes). Node 802 initiates a unidirectional RPC to fetch a payload spanning one or more pages from node 822. In an embodiment, an application (e.g., application 112) provides an optional metadata to specify the address and/or length of the target location for the data. For instance, the application specifies the application memory where the page data is to be placed using an RDMA operation.

An RDMA manager (e.g., RDMA controller 226) on node 802, upon receiving the request for the fetch, performs perform an on-demand registration of the virtual address provided by node 802 so that node 822 can perform a one-sided RDMA write directly to this location. In examples, the application on node 802 ensures that sufficient PTEs were reserved for the page transfer. In the event enough PTEs were not reserved (e.g., a failure condition), various types of actions can be performed. In one implementation, if the requisite number of PTEs were reserved but are in use (e.g., by one or more other operations), the request will be queued until the PTEs are available for use. In another example, if there are insufficient PTEs reserved, the request will fail. In such a scenario, the application is notified of the failure and one or more additional PTEs are reserved in accordance with disclosed techniques.

In an embodiment, the RDMA manager on node 802 converts the information provided to a globally unique identifier (GUID) for use in one or more subsequent operations.

In an embodiment, the request is then be coalesced into the ring buffer on node 802. The request would also be appended with the GUID.

In an embodiment, a one-sided RDMA write-with-immediate is performed on the ring buffer of node 822 (e.g., using the remote token at the respective offset). Node 802 receives a notification from node 822 of the write completion from its completion queue.

In an example, an RDMA manager library calls one or more NDSPI APIs to perform the one-sided RDMA write using the network interface device (e.g. NIC). In embodiments, the RDMA write is performed without the involvement of the CPU/kernel to perform the RDMA operation.

In an embodiment, node 822 is notified on its completion queue of the new write and parses the buffer to obtain the RPC information.

In an example, a callback is triggered for each stream containing the address payload length and flags for the stream. An RDMA manager on node 822 also passes the GUID to an application of node 822 as this information would be passed back to the RDMA manager when the application needs to write the pages directly into the address in node 802 for the one-sided RDMA write operation. In implementations, this is performed since the RDMA manager does not have the context to cache the GUID due the RPC being unidirectional.

In an embodiment, the application layer on node 822 processes the request and performs one or more steps as needed based on the request.

In an example, the application on node 822 initiates a page transfer operation by providing the source virtual memory address and length that is to be used to obtain the source of the data to perform a one-sided RDMA write to node 802 (e.g., to the ring buffer on node 802). In embodiments, the foregoing is performed using an RPC invocation. In some examples, the RPC invocation includes the GUID information received previously.

In an example, the RDMA manager on node 822 performs an on-demand registration of the source virtual memory address for the requested length on node 822. I the event of a failure, if the requisite number of PTEs were reserved but are in use, then the request will be queued in one example. In another example, if there are insufficient PTEs, then the request fails, and errors will be communicated to the application. In one implementation, the application attempts to reserve additional PTEs and then initiate the response again and/or notifies node 802 of the RPC failure.

In an embodiment, once FMR succeeds, the RPC information is added to the RDMA send ring buffer.

In an example, a one-sided RDMA write is performed using the remote address and token of the node 802 provided in the GUID. The write operation is done with node 802 being passive in the I/O operation in embodiments. The write would use the address and local token of the page in node 822 as the source of the RDMA write operation.

In an embodiment, an additional write-with-immediate to the ring buffer of node 802 is needed to propagate the RPC information to node 802 since the RDMA manager of node 802 will not get notified of this write operation and hence cannot notify the application. In an embodiment, the GUID information will also be added to the ring buffer.

In an example, the RDMA manager on node 802 is notified from the completion queue tagged to the queue pair about the new write. At this point, the data would have already been copied to the target address in an embodiment. In various examples, the RPC information will be in the ring buffer and will need processing. Accordingly, the RDMA manager will copy the data from the registered memory to application memory and then trigger the callback for the application. The GUID obtained in the data stream would then be used by the RDMA manager of node 802 to deregister the mapped region if all the data has been written on node 802.

In an embodiment, the application on node 802 is notified of the RPC and takes one or more appropriate actions to process the data.

In accordance with disclosed techniques, another page transfer RPC operation is able to reuse the same set of PTEs following the completion of the transfer and deregistration of the mapped region. For instance, another page transfer RPC operation dynamically registers memory to perform the additional RPC operation. In accordance with embodiments, the number of PTEs utilized is proportional to the number of parallel page transfer operations required and the respective memory.

### IV. Example Mobile Device and Computer System Implementation

Client computing device 102, kernel 104, memory manager 106, network interface device 108, FMR system 110, application 112, physical memory 114, server 122, kernel 124, memory manager 126, network interface device 128, FMR system 130, application 132, physical memory 134, empty memory region creator 202, LAM creator 204, virtual memory 212, page table creator 216, page table 220, page table binder 224, RMDA controller 226, node 802, send queue 804, completion queue 806, receive queue 808, queue pair 810, send ring buffer 812, receive ring buffer 814, FMR system 816, node 822, send queue 824, completion queue 826, receive queue 828, queue pair 830, send ring buffer 832, receive ring buffer 834, and/or FMR system 836 (and/or any sub components therein) are implemented in hardware, or hardware combined with one or both of software and/or firmware. For example, client computing device 102, kernel 104, memory manager 106, network interface device 108, FMR system 110, application 112, physical memory 114, server 122, kernel 124, memory manager 126, network interface device 128, FMR system 130, application 132, physical memory 134, empty memory region creator 202, LAM creator 204, virtual memory 212, page table creator 216, page table 220, page table binder 224, RMDA controller 226, node 802, send queue 804, completion queue 806, receive queue 808, queue pair 810, send ring buffer 812, receive ring buffer 814, FMR system 816, node 822, send queue 824, completion queue 826, receive queue 828, queue pair 830, send ring buffer 832, receive ring buffer 834, and/or FMR system 836, and/or the components described therein, and/or the steps of flowcharts 300, 400, 500, 600, and/or 700 are each implemented as computer program code/instructions configured to be executed in one or more processors and stored in a computer readable storage medium. Alternatively, client computing device 102, kernel 104, memory manager 106, network interface device 108, FMR system 110, application 112, physical memory 114, server 122, kernel 124, memory manager 126, network interface device 128, FMR system 130, application 132, physical memory 134, empty memory region creator 202, LAM creator 204, virtual memory 212, page table creator 216, page table 220, page table binder 224, RMDA controller 226, node 802, send queue 804, completion queue 806, receive queue 808, queue pair 810, send ring buffer 812, receive ring buffer 814, FMR system 816, node 822, send queue 824, completion queue 826, receive queue 828, queue pair 830, send ring buffer 832, receive ring buffer 834, and/or FMR system 836, and/or the components described therein, and/or the steps of flowcharts 300, 400, 500, 600, and/or 700 are implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions.

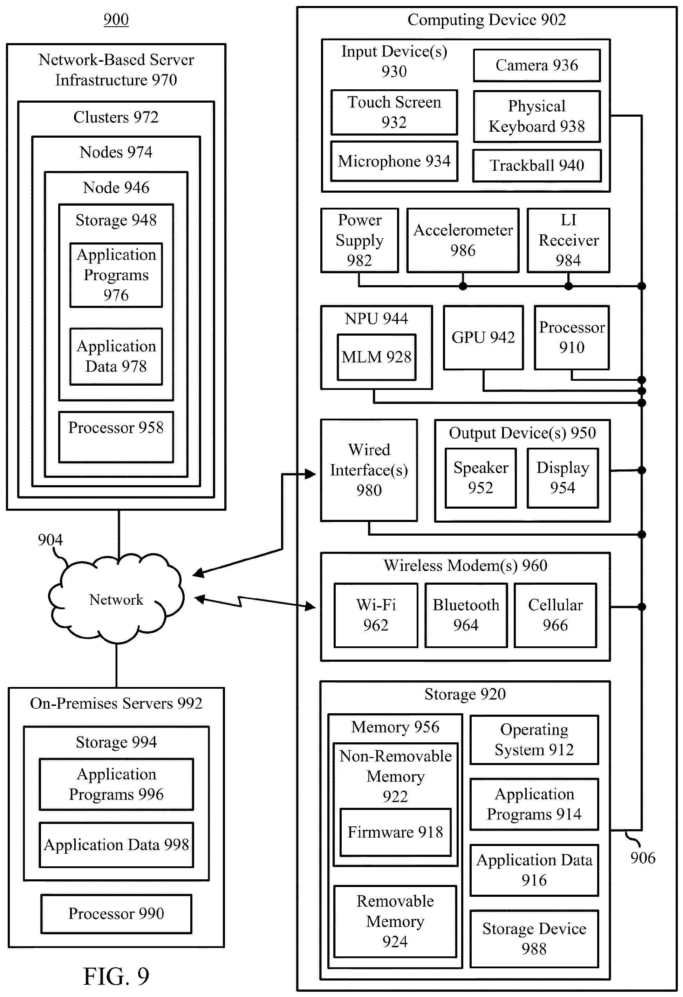

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 9. FIG. 9 shows a block diagram of an exemplary computing environment 900 that includes a computing device 902. Computing device 902 is an example of client computing device 102, server 122, node 802, and/or node 822, which each include one or more of the components of computing device 902. In some embodiments, computing device 902 is communicatively coupled with devices (not shown in FIG. 9) external to computing environment 900 via network 904. Network 904 comprises one or more networks such as local area networks (LANs), wide area networks (WANs), enterprise networks, the Internet, etc. In examples, network 904 includes one or more wired and/or wireless portions. In some examples, network 904 additionally or alternatively includes a cellular network for cellular communications. Computing device 902 is described in detail as follows.

Computing device 902 can be any of a variety of types of computing devices. Examples of computing device 902 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 902 is a stationary computing device such as a desktop computer, a personal computer (PC), a stationary server device, a minicomputer, a mainframe, a supercomputer, etc.

As shown in FIG. 9, computing device 902 includes a variety of hardware and software components, including a processor 910, a storage 920, a graphics processing unit (GPU) 942, a neural processing unit (NPU) 944, one or more input devices 930, one or more output devices 950, one or more wireless modems 960, one or more wired interfaces 980, a power supply 982, a location information (LI) receiver 984, and an accelerometer 986. Storage 920 includes memory 956, which includes non-removable memory 922 and removable memory 924, and a storage device 988. Storage 920 also stores an operating system 912, application programs 914, and application data 916. Wireless modem(s) 960 include a Wi-Fi modem 962, a Bluetooth modem 964, and a cellular modem 966. Output device(s) 950 includes a speaker 952 and a display 954. Input device(s) 930 includes a touch screen 932, a microphone 934, a camera 936, a physical keyboard 938, and a trackball 940. Not all components of computing device 902 shown in FIG. 9 are present in all embodiments, additional components not shown may be present, and in a particular embodiment any combination of the components are present. In examples, components of computing device 902 are mounted to a circuit card (e.g., a motherboard) of computing device 902, integrated in a housing of computing device 902, or otherwise included in computing device 902. The components of computing device 902 are described as follows.

In embodiments, a single processor 910 (e.g., central processing unit (CPU), microcontroller, a microprocessor, signal processor, ASIC (application specific integrated circuit), and/or other physical hardware processor circuit) or multiple processors 910 are present in computing device 902 for performing such tasks as program execution, signal coding, data processing, input/output processing, power control, and/or other functions. In examples, processor 910 is a single-core or multi-core processor, and each processor core is single-threaded or multithreaded (to provide multiple threads of execution concurrently). Processor 910 is configured to execute program code stored in a computer readable medium, such as program code of operating system 912 and application programs 914 stored in storage 920. The program code is structured to cause processor 910 to perform operations, including the processes/methods disclosed herein. Operating system 912 controls the allocation and usage of the components of computing device 902 and provides support for one or more application programs 914 (also referred to as "applications" or "apps"). In examples, application programs 914 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 910 includes one or more general processors (e.g., CPUs) configured with or coupled to one or more hardware accelerators, such as one or more NPUs 944 and/or one or more GPUs 942.

Any component in computing device 902 can communicate with any other component according to function, although not all connections are shown for ease of illustration. For instance, as shown in FIG. 9, bus 906 is a multiple signal line communication medium (e.g., conductive traces in silicon, metal traces along a motherboard, wires, etc.) present to communicatively couple processor 910 to various other components of computing device 902, although in other embodiments, an alternative bus, further buses, and/or one or more individual signal lines is/are present to communicatively couple components. Bus 906 represents one or more of any of several types of bus structures, including a memory bus or memory controller, a peripheral bus, an accelerated graphics port, and a processor or local bus using any of a variety of bus architectures.

Storage 920 is physical storage that includes one or both of memory 956 and storage device 988, which store operating system 912, application programs 914, and application data 916 according to any distribution. Non-removable memory 922 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 922 includes main memory and is separate from or fabricated in a same integrated circuit as processor 910. As shown in FIG. 9, non-removable memory 922 stores firmware 918 that is present to provide low-level control of hardware. Examples of firmware 918 include BIOS (Basic Input/Output System, such as on personal computers) and boot firmware (e.g., on smart phones). In examples, removable memory 924 is inserted into a receptacle of or is otherwise coupled to computing device 902 and can be removed by a user from computing device 902. Removable memory 924 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more of storage device 988 are present that are internal and/or external to a housing of computing device 902 and are or are not removable. Examples of storage device 988 include a hard disk drive, a SSD, a thumb drive (e.g., a USB (Universal Serial Bus) flash drive), or other physical storage device.

One or more programs are stored in storage 920. Such programs include operating system 912, one or more application programs 914, and other program modules and program data. Examples of such application programs include computer program logic (e.g., computer program code/instructions) for implementing kernel 104, memory manager 106, FMR system 110, application 112, kernel 124, memory manager 126, FMR system 130, application 132, empty memory region creator 202, LAM creator 204, virtual memory 212, page table creator 216, page table 220, page table binder 224, RMDA controller 226, send queue 804, completion queue 806, receive queue 808, queue pair 810, send ring buffer 812, receive ring buffer 814, FMR system 816, send queue 824, completion queue 826, receive queue 828, queue pair 830, send ring buffer 832, receive ring buffer 834, FMR system 836, and/or each of the components described therein, as well as any of flowcharts 300, 400, 500, 600, and/or 700, and/or any individual steps thereof.

Storage 920 also stores data used and/or generated by operating system 912 and application programs 914 as application data 916. Examples of application data 916 include web pages, text, images, tables, sound files, video data, and other data. In examples, application data 916 is sent to and/or received from one or more network servers or other devices via one or more wired or wireless networks. Storage 920 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 902 through one or more input devices 930 and receives information from computing device 902 through one or more output devices 950. Input device(s) 930 includes one or more of touch screen 932, microphone 934, camera 936, physical keyboard 938 and/or trackball 940 and output device(s) 950 includes one or more of speaker 952 and display 954. Each of input device(s) 930 and output device(s) 950 are integral to computing device 902 (e.g., built into a housing of computing device 902) or are external to computing device 902 (e.g., communicatively coupled wired or wirelessly to computing device 902 via wired interface(s) 980 and/or wireless modem(s) 960). Further input devices 930 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 954 displays information, as well as operating as touch screen 932 by receiving user commands and/or other information (e.g., by touch, finger gestures, virtual keyboard, etc.) as a user interface. Any number of each type of input device(s) 930 and output device(s) 950 are present, including multiple microphones 934, multiple cameras 936, multiple speakers 952, and/or multiple displays 954.

In embodiments where GPU 942 is present, GPU 942 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 942 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 944 (also referred to as an "artificial intelligence (AI) accelerator" or "deep learning processor (DLP)") is a processor or processing unit configured to accelerate artificial intelligence and machine learning applications, such as execution of machine learning (ML) model (MLM) 928. In an example, NPU 944 is configured for a data-driven parallel computing and is highly efficient at processing massive multimedia data such as videos and images and processing data for neural networks. NPU 944 is configured for efficient handling of AI-related tasks, such as speech recognition, background blurring in video calls, photo or video editing processes like object detection, etc.

In embodiments disclosed herein that implement ML models, NPU 944 can be utilized to execute such ML models, of which MLM 928 is an example. For instance, where applicable, MLM 928 is a generative AI model that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs), text-to-image AI image generation systems, text-to-video AI generation systems, etc. A large language model (LLM) is a language model that has a high number of model parameters. In examples, an LLM has millions, billions, trillions, or even greater numbers of model parameters. Model parameters of an LLM are the weights and biases the model learns during training. Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 944 is used to train MLM 928. To train MLM 928, training data is that includes input features (attributes) and their corresponding output labels/target values (e.g., for supervised learning) is collected. A training algorithm is a computational procedure that is used so that MLM 928 learns from the training data. Parameters/weights are internal settings of MLM 928 that are adjusted during training by the training algorithm to reduce a difference between predictions by MLM 928 and actual outcomes (e.g., output labels). In some examples, MLM 928 is set with initial values for the parameters/weights. A loss function measures a dissimilarity between predictions by MLM 928 and the target values, and the parameters/weights of MLM 928 are adjusted to minimize the loss function. The parameters/weights are iteratively adjusted by an optimization technique, such as gradient descent. In this manner, MLM 928 is generated through training by NPU 944 to be used to generate inferences based on received input feature sets for particular applications. MLM 928 is generated as a computer program or other type of algorithm configured to generate an output (e.g., a classification, a prediction/inference) based on received input features, and is stored in the form of a file or other data structure.

In examples, such training of MLM 928 by NPU 944 is supervised or unsupervised. According to supervised learning, input objects (e.g., a vector of predictor variables) and a desired output value (e.g., a human-labeled supervisory signal) train MLM 928. The training data is processed, building a function that maps new data on expected output values. Example algorithms usable by NPU 944 to perform supervised training of MLM 928 in particular implementations include support-vector machines, linear regression, logistic regression, Naive Bayes, linear discriminant analysis, decision trees, K-nearest neighbor algorithm, neural networks, and similarity learning.

In an example of supervised learning where MLM 928 is an LLM, MLM 928 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided the same input twice and provides two different outputs and a user ranks which output is preferred. In this context, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 928 is trained to learn patterns from unlabeled data. For instance, in embodiments where MLM 928 implements unsupervised learning techniques, MLM 928 identifies one or more classifications or clusters to which an input belongs. During a training phase of MLM 928 according to unsupervised learning, MLM 928 tries to mimic the provided training data and uses the error in its mimicked output to correct itself (i.e., correct weights and biases). In further examples, NPU 944 perform unsupervised training of MLM 928 according to one or more alternative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 944 need not necessarily be present in all ML model embodiments. In embodiments where ML models are present, any one or more of processor 910, GPU 942, and/or NPU 944 can be present to train and/or execute MLM 928.

One or more wireless modems 960 can be coupled to antenna(s) (not shown) of computing device 902 and can support two-way communications between processor 910 and devices external to computing device 902 through network 904, as would be understood to persons skilled in the relevant art(s). Wireless modem 960 is shown generically and can include a cellular modem 966 for communicating with one or more cellular networks, such as a GSM network for data and voice communications within a single cellular network, between cellular networks, or between the mobile device and a public switched telephone network (PSTN). In examples, wireless modem 960 also or alternatively includes other radio-based modem types, such as a Bluetooth modem 964 (also referred to as a "Bluetooth device") and/or Wi-Fi modem 962 (also referred to as an "wireless adaptor"). Wi-Fi modem 962 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 964 is configured to communicate with another Bluetooth-capable device according to the Bluetooth short-range wireless technology standard(s) such as IEEE 802.15.1 and/or managed by the Bluetooth Special Interest Group (SIG).

Computing device 902 can further include power supply 982, LI receiver 984, accelerometer 986, and/or one or more wired interfaces 980. Example wired interfaces 980 include a USB port, IEEE 1394 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 980 of computing device 902 provide for wired connections between computing device 902 and network 904, or between computing device 902 and one or more devices/peripherals when such devices/peripherals are external to computing device 902 (e.g., a pointing device, display 954, speaker 952, camera 936, physical keyboard 938, etc.). Power supply 982 is configured to supply power to each of the components of computing device 902 and receives power from a battery internal to computing device 902, and/or from a power cord plugged into a power port of computing device 902 (e.g., a USB port, an A/C power port). LI receiver 984 is useable for location determination of computing device 902 and in examples includes a satellite navigation receiver such as a Global Positioning System (GPS) receiver and/or includes other type of location determiner configured to determine location of computing device 902 based on received information (e.g., using cell tower triangulation, etc.). Accelerometer 986, when present, is configured to determine an orientation of computing device 902.

Note that the illustrated components of computing device 902 are not required or all-inclusive, and fewer or greater numbers of components can be present as would be recognized by one skilled in the art. In examples, computing device 902 includes one or more of a gyroscope, barometer, proximity sensor, ambient light sensor, digital compass, etc. In an example, processor 910 and memory 956 are co-located in a same semiconductor device package, such as being included together in an integrated circuit chip, FPGA, or system-on-chip (SOC), optionally along with further components of computing device 902.

In embodiments, computing device 902 is configured to implement any of the above-described features of flowcharts herein. Computer program logic for performing any of the operations, steps, and/or functions described herein is stored in storage 920 and executed by processor 910.

In some embodiments, server infrastructure 970 is present in computing environment 900 and is communicatively coupled with computing device 902 via network 904. Server infrastructure 970, when present, is a network-accessible server set (e.g., a cloud-based environment or platform). As shown in FIG. 9, server infrastructure 970 includes clusters 972. Each of clusters 972 comprises a group of one or more compute nodes and/or a group of one or more storage nodes. For example, as shown in FIG. 9, cluster 972 includes nodes 974. Each of nodes 974 are accessible via network 904 (e.g., in a "cloud-based" embodiment) to build, deploy, and manage applications and services. In examples, any of nodes 974 is a storage node that comprises a plurality of physical storage disks, SSDs, and/or other physical storage devices that are accessible via network 904 and are configured to store data associated with the applications and services managed by nodes 974.

Each of nodes 974, as a compute node, comprises one or more server computers, server systems, and/or computing devices. For instance, a node 974 in accordance with an embodiment includes one or more of the components of computing device 902 disclosed herein. Each of nodes 974 is configured to execute one or more software applications (or "applications") and/or services and/or manage hardware resources (e.g., processors, memory, etc.), which are utilized by users (e.g., customers) of the network-accessible server set. In examples, as shown in FIG. 9, nodes 974 includes a node 946 that includes storage 948 and/or one or more of a processor 958 (e.g., similar to processor 910, GPU 942, and/or NPU 944 of computing device 902). Storage 948 stores application programs 976 and application data 978. Processor(s) 958 operate application programs 976 which access and/or generate related application data 978. In an implementation, nodes such as node 946 of nodes 974 operate or comprise one or more virtual machines, with each virtual machine emulating a system architecture (e.g., an operating system), in an isolated manner, upon which applications such as application programs 976 are executed.

In embodiments, one or more of clusters 972 are located/co-located (e.g., housed in one or more nearby buildings with associated components such as backup power supplies, redundant data communications, environmental controls, etc.) to form a datacenter, or are arranged in other manners. Accordingly, in an embodiment, one or more of clusters 972 are included in a datacenter in a distributed collection of datacenters. In embodiments, exemplary computing environment 900 comprises part of a cloud-based platform.

In an embodiment, computing device 902 accesses application programs 976 for execution in any manner, such as by a client application and/or a browser at computing device 902.

In an example, for purposes of network (e.g., cloud) backup and data security, computing device 902 additionally and/or alternatively synchronizes copies of application programs 914 and/or application data 916 to be stored at network-based server infrastructure 970 as application programs 976 and/or application data 978. In examples, operating system 912 and/or application programs 914 include a file hosting service client configured to synchronize applications and/or data stored in storage 920 at network-based server infrastructure 970.

In some embodiments, on-premises servers 992 are present in computing environment 900 and are communicatively coupled with computing device 902 via network 904. On-premises servers 992, when present, are hosted within an organization's infrastructure and, in many cases, physically onsite of a facility of that organization. On-premises servers 992 are controlled, administered, and maintained by IT (Information Technology) personnel of the organization or an IT partner to the organization. Application data 998 can be shared by on-premises servers 992 between computing devices of the organization, including computing device 902 (when part of an organization) through a local network of the organization, and/or through further networks accessible to the organization (including the Internet). Furthermore, in examples, on-premises servers 992 serve applications such as application programs 996 to the computing devices of the organization, including computing device 902. Accordingly, in examples, on-premises servers 992 include storage 994 (which includes one or more physical storage devices such as storage disks and/or SSDs) for storage of application programs 996 and application data 998 and include a processor 990 (e.g., similar to processor 910, GPU 942, and/or NPU 944 of computing device 902) for execution of application programs 996. In some embodiments, multiple processors 990 are present for execution of application programs 996 and/or for other purposes. In further examples, computing device 902 is configured to synchronize copies of application programs 914 and/or application data 916 for backup storage at on-premises servers 992 as application programs 996 and/or application data 998.

Embodiments described herein may be implemented in one or more of computing device 902, network-based server infrastructure 970, and on-premises servers 992. For example, in some embodiments, computing device 902 is used to implement systems, clients, or devices, or components/subcomponents thereof, disclosed elsewhere herein. In other embodiments, a combination of computing device 902, network-based server infrastructure 970, and/or on-premises servers 992 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 920. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 914) are stored in storage 920. Such computer programs can also be received via wired interface(s) 960 and/or wireless modem(s) 960 over network 904. Such computer programs, when executed or loaded by an application, enable computing device 902 to implement features of embodiments discussed herein. Accordingly, such computer programs represent controllers of the computing device 902.

Embodiments are also directed to computer program products comprising computer code or instructions stored on any computer-readable medium or computer-readable storage medium. Such computer program products include the physical storage of storage 920 as well as further physical storage types.

### V. Additional Example Embodiments

A memory registration system is disclosed herein. The memory registration system comprises a processor; and a memory device that stores program code structured to cause the processor to: reserve, in a first network interface device of a first computing device, a set of page table entries for an application, each page table entry comprising a placeholder for a memory pointer; pin, by a kernel of the first computing device, a page in a physical memory of the first computing device; configure a page table entry of the set of page table entries in the network interface device with information indicative of a physical memory address corresponding to the page; and perform a remote direct memory access (RDMA) operation over a network based on the page table entry.

In one implementation of the foregoing system, the RDMA operation comprises one of a write or read operation over the network.

In another implementation of the foregoing system, the placeholder for the memory pointer comprises a null value.

In another implementation of the foregoing system, the program code is structured to cause the processor to perform the RDMA operation by providing a remote token from the first network interface device to a second network interface device of a second computing device, the remote token indicating a memory location of the page in the physical memory of the first computing device.

In another implementation of the foregoing system, the program code is further structured to cause the processor to: obtain, from the first network interface device, a token that references the set of page table entries.

In another implementation of the foregoing system, the program code is further structured to cause the processor to: obtain, from the kernel, a logical address memory reference that is within the set of page table entries, the logical address memory reference corresponding to the page in the physical memory; and provide, to the network interface device, the logical address memory reference and the token to configure the page table entry.

In another implementation of the foregoing system, the network interface device comprises a hardware network interface card.

In another implementation of the foregoing system, the program code is further structured to cause the processor to deregister the configuration of the page table entry following a completion of the RDMA operation, wherein the deregistration causes the page table entry in the network interface device to revert to comprising the placeholder.

In another implementation of the foregoing system, the reservation of the set of page table entries is performed prior to the application pinning the page in the physical memory.

A method for memory registration is disclosed herein. The method comprises: reserving, in a first network interface device of a first computing device, a set of page table entries for an application, each page table entry comprising a placeholder for a memory pointer; pinning, by a kernel of the first computing device, a page in a physical memory of the first computing device; configuring a page table entry of the set of page table entries in the network interface device with information indicative of a physical memory address corresponding to the page; and performing a remote direct memory access (RDMA) operation over a network based on the page table entry.

In one implementation of the foregoing method, the RDMA operation comprises one of a write or read operation over the network.

In another implementation of the foregoing method, the placeholder for the memory pointer comprises a null value.

In another implementation of the foregoing method, the method further comprises providing a remote token from the first network interface device to a second network interface device of a second computing device, the remote token indicating a memory location of the page in the physical memory of the first computing device.

In another implementation of the foregoing method, the method further comprises obtaining, from the first network interface device, a token that references the set of page table entries.

In another implementation of the foregoing method, the method further comprises: obtaining, from the kernel, a logical address memory reference that is within the set of page table entries, the logical address memory reference corresponding to the page in the physical memory; and providing, to the network interface device, the logical address memory reference and the token to configure the page table entry.

In another implementation of the foregoing method, the method further comprises deregistering the configuration of the page table entry following a completion of the RDMA operation, wherein the deregistering causes the page table entry in the network interface device to revert to comprising the placeholder.

A computer-readable storage medium is disclosed herein. The computer-readable storage medium has computer program code recorded thereon that when executed by at least one processor causes the at least one processor to perform a method comprising: reserving, in a first network interface device of a first computing device, a set of page table entries for an application, each page table entry comprising a placeholder for a memory pointer; pinning, by a kernel of the first computing device, a page in a physical memory of the first computing device; configuring a page table entry of the set of page table entries in the network interface device with information indicative of a physical memory address corresponding to the page; and performing a remote direct memory access (RDMA) operation over a network based on the page table entry.

In one implementation of the foregoing computer-readable storage medium, the RDMA operation comprises one of a write or read operation over the network.

In another implementation of the foregoing computer-readable storage medium, the method further comprises obtaining, from the first network interface device, a token that references the set of page table entries; obtaining, from the kernel, a logical address memory reference that is within the set of page table entries, the logical address memory reference corresponding to the page in the physical memory; and providing, to the network interface device, the logical address memory reference and the token to configure the page table entry.

In another implementation of the foregoing computer-readable storage medium, the method further comprises deregistering the configuration of the page table entry following a completion of the RDMA operation, wherein the deregistering causes the page table entry in the network interface device to revert to comprising the placeholder.

### VI. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

In the discussion, unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of the embodiment for an application for which it is intended. Furthermore, where "based on" and/or "in response to" are used to indicate an effect being a result of an indicated cause, it is to be understood that the effect is not required to only result from the indicated cause, but that any number of possible additional causes may also contribute to the effect. Thus, as used herein, the terms "based on" and "in response to" should be understood to be equivalent to the term "based at least on" and "at least in response to," respectively.

While various embodiments of the present disclosure have been described above, it should be understood that they have been presented by way of example only, and not limitation. It will be understood by those skilled in the relevant art(s) that various changes in form and details may be made therein without departing from the scope of the embodiments as defined in the appended claims. Accordingly, the breadth and scope of the claimed embodiments should not be limited by any of the above-described exemplary embodiments, but should be defined only in accordance with the following claims and their equivalents.

## Claims

1. A memory registration system (100, 200, 800, 900) comprising:
a processor (910, 958, 990); and
a memory device (920, 948, 956, 988, 994) that stores program code (914, 976, 996) structured to cause the processor to:
reserve, in a first network interface device (108) of a first computing device (102), a set of page table entries (222) for an application (112), each page table entry comprising a placeholder for a memory pointer;
pin, by a kernel (104) of the first computing device, a page (208) in a physical memory (114) of the first computing device;
configure a page table entry of the set of page table entries (222) in the network interface device (108) with information indicative of a physical memory address corresponding to the page (208); and
perform a remote direct memory access, RDMA, operation over a network (116) based on the page table entry.

2. The memory registration system of claim 1, wherein the RDMA operation comprises one of a write or read operation over the network.

3. The memory registration system of claim 1 or 2, wherein the placeholder for the memory pointer comprises a null value.

4. The memory registration system of any preceding claim, wherein the program code is structured to cause the processor to perform the RDMA operation by providing a remote token from the first network interface device to a second network interface device of a second computing device, the remote token indicating a memory location of the page in the physical memory of the first computing device.

5. The memory registration system of any preceding claim, wherein the program code is further structured to cause the processor to:
obtain, from the first network interface device, a token that references the set of page table entries.

6. The memory registration system of claim 5, wherein the program code is further structured to cause the processor to:
obtain, from the kernel, a logical address memory reference that is within the set of page table entries, the logical address memory reference corresponding to the page in the physical memory; and
provide, to the network interface device, the logical address memory reference and the token to configure the page table entry.

7. The memory registration system of any preceding claim, wherein the network interface device comprises a hardware network interface card.

8. The memory registration system of any preceding claim, wherein the program code is further structured to cause the processor to deregister the configuration of the page table entry following a completion of the RDMA operation, wherein the deregistration causes the page table entry in the network interface device to revert to comprising the placeholder.

9. The memory registration system of any preceding claim, wherein the reservation of the set of page table entries is performed prior to the application pinning the page in the physical memory.

10. A method (300) for memory registration, comprising:
reserving (302), in a first network interface device of a first computing device, a set of page table entries for an application, each page table entry comprising a placeholder for a memory pointer;
pinning (304), by a kernel of the first computing device, a page in a physical memory of the first computing device;
configuring (306) a page table entry of the set of page table entries in the network interface device with information indicative of a physical memory address corresponding to the page; and
performing (308) a remote direct memory access, RDMA, operation over a network based on the page table entry.

11. The method of claim 10, wherein the RDMA operation comprises one of a write or read operation over the network.

12. The method of claim 10 or 11, wherein the placeholder for the memory pointer comprises a null value.

13. The method of any of claims 10 to 12, further comprising:
providing a remote token from the first network interface device to a second network interface device of a second computing device, the remote token indicating a memory location of the page in the physical memory of the first computing device.

14. The method of any of claims 10 to 13, further comprising:
obtaining, from the first network interface device, a token that references the set of page table entries.

15. A computer-readable storage medium (920, 948, 994) having computer program code (914, 976, 996) recorded thereon that when executed by at least one processor (910, 958, 990) causes the at least one processor to perform a method (300) comprising:
reserving (302), in a first network interface device of a first computing device, a set of page table entries for an application, each page table entry comprising a placeholder for a memory pointer;
pinning (304), by a kernel of the first computing device, a page in a physical memory of the first computing device;
configuring (306) a page table entry of the set of page table entries in the network interface device with information indicative of a physical memory address corresponding to the page; and
performing (308) a remote direct memory access, RDMA, operation over a network based on the page table entry.
